# EUROPEAN PATENT SPECIFICATION

(11) **EP 2 198 185 B1**
(45) Date of publication and mention of the grant of the patent: **18.01.2012**
(21) Application number: 08807797.9
(22) Date of filing: 25.09.2008
(51) Int. Cl.: F16H 55/30

(54) **VARIABLE DIAMETER GEAR DEVICE AND VARIABLE TRANSMISSIONS USING SUCH DEVICES**
GETRIEBEVORRICHTUNG MIT VARIABLEM DURCHMESSER UND SOLCHE VORRICHTUNGEN VERWENDENDE VARIABLE GETRIEBE
DISPOSITIF D'ENGRENAGE À DIAMÈTRE VARIABLE ET TRANSMISSIONS VARIABLES UTILISANT DE TELS DISPOSITIFS

(30) Priority: 01.11.2007 US 996108 P; 22.07.2008 US 82533; 04.09.2008 US 204027
(43) Date of publication of application: 23.06.2010
(73) Proprietor: Iqwind Ltd., 46154 Herzelia (IL)
(72) Inventor: EITAN, Nimrod, 69460 Tel Aviv (IL); NAVEH, Nathan, 49925 Kfar-Mass (IL); ROGOZINSKI, Joseph, 52366 Ramat Gan (IL)
(74) Representative: Modiano, Micaela Nadia
(86) International application number: PCT/IB2008/053900
(87) International publication number: WO 2009/056996

(56) References cited:
- WO-A-99/11515
- WO-A-02/061306
- GB-A- 2 279 711
- US-A- 4 129 044

## Description

The present invention relates to variable transmissions and, in particular, it concerns a variable diameter gear device according to the preamble of claim 1 and as it is disclosed in GB2279711A.

A transmission transfers rotational power between an input shaft and an output shaft, and defines a transmission ratio between a rate of rotation at the input shaft and the corresponding rate of rotation at the output shaft. This ratio may be less than one where output rotation is slower, but higher torque, than the input, may be equal to one where the input and output rotate at the same rate, or may be greater than one where the output rotates faster, but with lower torque, than the input The transmission may be bidirectional, i.e., allowing an input in either a clockwise or an anticlockwise rotational direction, and may be reversible, i.e., where the "output" may be rotated to transfer power to the "input".

In many circumstances, it is desirable or necessary to provide a variable transmission, i.e., where the transmission ratio can be changed. Examples include vehicles, where a variable output speed is needed while maintaining the power source operating as near as possible to its optimal speed for the required power output, and power generators, where it may be preferably to maintain a constant output speed despite variations in the power of a source of mechanical power being harnessed.

In transmission systems based on gear wheels (either in direct engagement or via chain linkages), the transmission ratio between two gear wheels is defined by the ratio between the number of gear teeth in each. Thus, if an input shaft has a gear wheel with n₁=60 teeth and drives, directly or via a chain, an output shaft gear with n₂=30 teeth, the transmission ratio TR will be n₁/n₂ = 2, and the output shaft will turn 2 revolutions for each revolution of the input shaft. In order to vary the transmission ratio, a set of gear wheels with differing numbers of teeth are typically provided. However, switching engagement from one gear wheel to another is problematic. There is typically a momentary loss of driving relation between the input and the output, as in a traditional "manual" automobile transmission, and/or the shift may result in a sudden jolt or reduced reliability, such as in a derailer gear system common in bicycles. None of the available options for switching engagement between multiple gear wheels provides for a reliable and smooth transition between transmission ratios without momentary loss of driving engagement.

As an alternative to switching between gears, various transmissions have been proposed which employ variable diameter pulleys or conical drive elements with corresponding belts to achieve variable transmission ratios. However, gradual variations of diameter can typically only be achieved in toothless friction-based systems. Reliance on frictional transfer of torque introduces its own set of problems, including loss of torque through slippage, and mechanical wear and unreliability due to high tension required to maintain frictional engagement.

Various attempts have been made to design a gear wheel which would provide a variable diameter and variable effective number of teeth. Particularly for bicycles, many designs have been proposed in which segments of a gear wheel can be moved radially outwards so that the segments approximate to rounded corners of a toothed polygon with variable spaces therebetween. These designs can engage a chain and have a variable effective number of teeth where the spaces correspond to "missing" teeth. Examples of such designs may be found in US Patents Nos. 2,782,649 and 4,634,406, and in PCT Patent Application Publication No. WO 83/02925. This approach generates a non-circular effective gear which has missing teeth between the gear wheel segments. As a result, it is clearly incompatible with direct engagement between gearwheels. Even when used with a chain, the rotating polygonal shape would cause instability and vibration if used at significant speeds and does not provide uniform power transfer during rotation.

A further variant of the aforementioned approach is presented in German Patent Application Publication No. DE 10016698 A1. In this case, sprocket teeth are provided as part of a flexible chain which is wrapped around a structure of radially displaceable segments. The chain is anchored to one of the displaceable segments and a variable excess length at the other end of the chain is spring-biased to a recoiled storage state within an inner volume of the device. This structure would appear to be an improvement over the aforementioned documents in the sense that sprocket teeth are provided spanning the gaps between the radially displaceable segments. However, since there is still a gap between the teeth where the chain enters the inner storage volume, and since the proposed structure still fails to maintain a circular profile, it still shares most if not all of the aforementioned disadvantages of the radially displaceable segment designs: it cannot be used in direct engagement with a gearwheel and does not provide uniform power transfer during rotation.

There is therefore a need for a variable diameter gear device which would provide a variable effective number of teeth while maintaining circular symmetry and allowing continuous direct engagement with another gear wheel.

### SUMMARY OF THE INVENTION

The present invention is a variable diameter gear device

According to the teachings of the present invention there is provided, a variable diameter gear device having the features of claim 1.

According to a further feature of the present invention, the diameter changer is further configured to displace the gear tooth set so as to vary a degree of peripheral coextension between at least the first and the second gear tooth sequences so as to selectively transform the gear device to each of a plurality of intermediate states each providing an effective cylindrical gear with a corresponding integer effective number of teeth assuming a value between the first and the second effective numbers of teeth.

According to a further feature of the present invention, the diameter changer is configured to position all of the gear teeth of the gear tooth set on a virtual cylinder coaxial with the axle in each of the first and the second states.

According to a further feature of the present invention, each of the tooth sequences is implemented as a strip of gear teeth interconnected so as to maintain the uniform pitch while accommodating a variable radius of curvature between the first and the second states.

According to a further feature of the present invention, the diameter changer transfers a turning moment between both the first and the second gear tooth sequences and the axle via a single mechanical linkage.

According to a further feature of the present invention, the diameter changer transfers a turning moment between the first and the second gear tooth sequences and the axle via separate mechanical linkages angularly spaced around the axle.

According to a further feature of the present invention, the gear tooth set has a single region with a variable degree of peripheral coextension between the gear tooth sequences.

According to a further feature of the present invention, the gear tooth set has a plurality of regions with a variable degree of peripheral coextension between the gear tooth sequences.

According to a further feature of the present invention, the diameter changer includes at least one substantially conical element engaged with at least one of the gear tooth sequences such that axial displacement of the substantially conical element changes a distance of the gear teeth of the at least one gear tooth sequence from the axis.

According to a further feature of the present invention, the substantially conical element has a stepped conical surface.

According to a further feature of the present invention, the substantially conical element has a smooth conical surface.

According to a further feature of the present invention, the diameter changer includes at least one pair of slotted disks associated with the axle, and a plurality of pins associated with at least one of the gear tooth sequences and engaged in the slots, the slotted disks being configured such that relative rotation of the slotted disks about the axis changes a distance of the gear teeth of the at least one gear tooth sequence from the axis.

According to a further feature of the present invention, the diameter changer includes a sensor deployed to generate an output indicative of an effective diameter of the variable diameter gear device, the diameter changer being responsive to the output to adjust the gear tooth set to provide an effective cylindrical gear with an integer effective number of teeth.

According to a further feature of the present invention, the diameter changer includes: (a) a sensor deployed to generate an output indicative of a current angular position of the axle; and (b) a controller responsive to the output to selectively perform the transforming while the axle is within a permitted range of angular positions.

### BRIEF DESCRIPTION OF THE DRAWINGS

The invention is herein described, by way of example only, with reference to the accompanying drawings, wherein:
FIGS. 1A and 1B are schematic side views of a first and a second displaceable gear tooth sequence, respectively, from a variable diameter gear device, constructed and operative according to the teachings of the present invention, the displaceable gear tooth sequences being shown in a first radially expanded state;
FIG. 1C is a schematic side view of a variable diameter gear device, constructed and operative according to the teachings of the present invention, including the displaceable gear tooth sequences of Figures 1A and 1B in their first radially expanded state;
FIGS. 2A, 2B and 2C are views similar to Figures 1A, 1B and 1C, respectively, with the displaceable gear tooth sequences in a radially smaller state;
FIGS. 3A, 3B and 3C are views similar to Figures 1A, 1B and 1C, respectively, with the displaceable gear tooth sequences in a fully closed state;
FIGS. 4A-4E are a series of schematic side views of the variable diameter gear device of Figure 1C illustrating a transition of the device from an effective gear of 28 teeth to an effective gear of 29 teeth;
FIGS. 5A-5E are schematic flattened gear tooth sequences illustrating a plurality of optional layouts with differing numbers of regions of variable peripheral coextension;
FIG. 6 is a view illustrating a first particularly preferred embodiment of a diameter changer for adjusting the effective diameter of the gear devices of the present invention;
FIG. 7A is an isometric view of the axially displaceable cones of the diameter changer of Figure 6, further illustrating a set of sensors associated with the diameter changer;
FIG. 7B is a block diagram illustrating a possible control loop for controlling operation of the axially displaceable cones of Figure 7A;
FIGS. 8A and 8B are schematic side views of an intermeshed gear transmission system employing the variable diameter gear device of Figure 1C together with an idler gear, the system being shown with the variable diameter gear device in a first state, having a first effective number of teeth, and a second state having a second effective number of teeth greater than said first effective number of teeth, respectively;
FIG. 9 is a block diagram illustrating a possible control loop for controlling the position of the idler gear in the transmission system of Figures 8A and 8B;
FIG. 10 is a schematic representation of a computerized control system for controlling a transmission system, constructed and operative according to the teachings of the present invention, including the variable diameter gear device of Figure 1C;
FIGS. 11A and 11B are schematic side views of a chain-based transmission system employing the variable diameter gear device of Figure 1C together with an output gear and an adaptive chain tensioning arrangement, the system being shown with the variable diameter gear device in a first state, having a first effective number of teeth, and a second state having a second effective number of teeth greater than said first effective number of teeth, respectively;
FIG. 12 is a block diagram illustrating a possible control loop for controlling the adaptive chain tensioning arrangement in the transmission system of Figures 8A and 8B;
FIG. 13 is an isometric view of an alternative embodiment of a transmission system, constructed and operative according to the teachings of the present invention, employing two variable diameter gear devices interlinked by a drive chain;
FIG. 14A is an isometric view of one of the variable diameter gear devices of Figure 13;
FIGS. 14B and 14C are isometric views of the variable diameter gear device of Figure 14A in an 'open' and 'closed' position, respectively, without a restriction mechanism;
FIG. 15 is an enlargement of detail designated "A" in Figure 14B, with addition of a restriction mechanism;
FIGS. 16A-16D are isometric views of a full, male, female and combined base link constituting a part of the gear device of Figure 14A;
FIGS. 17A and 17B are isometric and front views respectively of the full base link shown in Figure 16A;
FIGS. 18A and 18B are front views of portions of the gear device of Figures 14B and 14C, respectively;
FIGS. 19A and 19B are an isometric and front view, respectively, of a partial base link shown in Figure 16C with a restricting link thereon;
FIG. 19C is an isometric view of several partial base links shown in Figures 19A and 19B when interconnected;
FIG. 20 is an isometric view of a transmission chain;
FIG. 21 is an isometric view of a portion of the gear device of Figure 14A with the transmission chain shown in Figure 19D mounted thereon;
FIG. 22A is an isometric view of a portion of one of the gear devices of Figure 13 with the diameter changing mechanism, in a 'closed' position;
FIG. 22B is an isometric view of the portion of the portion of the gear device of Figure 22A with the diameter changing mechanism, in an 'open' position; and
FIG. 23 is an isometric view of a base link mounted on the diameter changing mechanism of Figures 22A and 22B to form a torque transferring linkage.

### DESCRIPTION OF THE PREFERRED EMBODIMENTS

The present invention is a variable diameter gear device and variable transmissions using such devices.

The principles and operation of variable diameter gears and corresponding transmission systems according to the present invention may be better understood with reference to the drawings and the accompanying description.

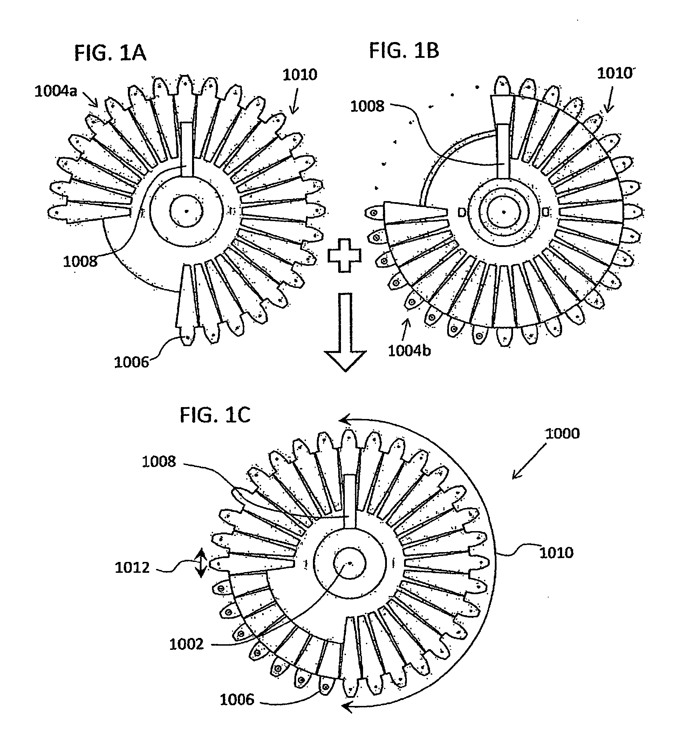

Referring now to the drawings, Figures 1A-3C illustrate the underlying principles of operation of a variable diameter gear device, generally designated **1000,** constructed and operative according to the teachings of the present invention, for use in a variable ratio transmission system. Generally speaking, variable diameter gear device **1000** has an axle **1002** defining an axis of rotation and a gear tooth set **1004** deployed around the axle. Gear tooth set **1004** includes at least a first displaceable gear tooth sequence **1004*a*** and a second displaceable gear tooth sequence **1004*b*,** each including a plurality of gear teeth 1006 spaced at a uniform pitch. A diameter changer, represented here schematically by rectangle **1008** and described further below, is mechanically linked to axle **1002** and to gear tooth set **1004** so as to transfer a turning moment between axle **1002** and gear tooth set **1004.**

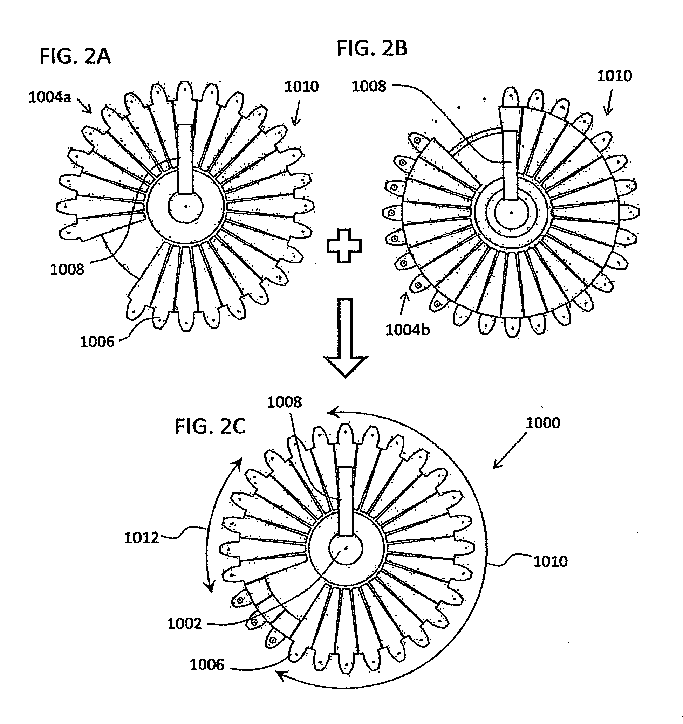

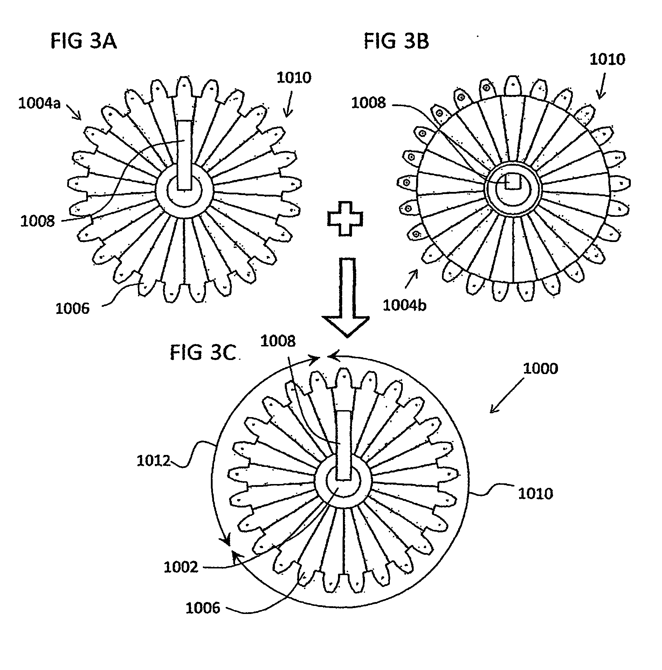

Diameter changer **1008** is configured to displace gear tooth set **1004** so as to vary a degree of peripheral coextension between at least the first and the second gear tooth sequences **1004*a*** and **1004*b*,** thereby transforming the gear device between at least two states in which gear tooth set **1004** forms an effective cylindrical gear with differing effective numbers of teeth. Thus, by way of example, in Figure 1C, gear tooth sequences **1004*a*** and **1000*b*** have a region of fixed overlap **1010** corresponding to 17 gear teeth, and a region of variable overlap **1012** shown here with 1 tooth overlapping. The result is an effective cylindrical gear wheel with 32 effective teeth. Figure 2C illustrates an adjusted state where region **1012** has 5 teeth overlapping, corresponding to an effective cylindrical gear wheel with 28 effective teeth. Figure 3C shows a fully closed configuration in which region **1012** has 8 teeth overlapping, giving an effective cylindrical gear wheel with 25 effective teeth. The range of numbers of effective teeth may range from a maximum in a state of zero overlap between the tooth sequences down to a minimum corresponding to a state of complete closure such that one or more of the tooth sequences is closed on itself, or may span only a subset of this range.

At this stage, it will already be apparent that the present invention provides profound advantages. Specifically, by employing variable overlap between at least two gear tooth sequences, the present invention provides a variable effective number of teeth while allowing continuous toothed engagement around the entire periphery of the effective cylindrical gear wheel in each state. This and other advantages of the present invention will become clearer from the following detailed description and examples.

It will be helpful at this point to define certain terminology as used herein in the description and claims. Firstly, reference is made to an "effective cylindrical gear" to refer to a structure which is capable of providing continuous toothed engagement with a simple or compound cylindrical idler gear. The individual gear sequences of the present invention typically have spaces in them, as illustrated in Figures 1A and 1B. However, when used together, as illustrated in Figure 1C, they allow continuous engagement around the entire revolution of the gear device. It will be noted that the present invention may be used to advantage in transmissions based on directly engaged gear wheels and in chain-based transmissions, as detailed below. However, even in the chain-based implementations, it is considered helpful to refer to an idler gear as a theoretical construct which may be used to define the geometrical properties of gear device **1000.**

An "idler gear" in this context is any gear configured for toothed engagement with gear device **1000.** The term "idler gear" is used to reflect a typical arrangement in which the idler gear is an intermediate component in a gear train, but without excluding the possibility of the "idler gear" being directly connected to a power input or power output axle. The idler gear may be a simple idler gear, i.e., a standard gear which is implemented with teeth sufficiently wide to engage the plurality of tooth sequences. Alternatively, for some implementations, a "compound idler gear" would be required, in which two or more gear wheels are mounted so as to rotate together with a common idler axle. The gear wheels making up a compound idler gear are typically identical and in-phase (i.e., with their teeth aligned), but may be implemented as out-of-phase (non-aligned teeth) gear wheels if a corresponding phase difference is implemented between the tooth sequences.

The terms "gear teeth" and "gear wheel" are used herein generically to refer to any and all formations on a rotating body, and the corresponding rotating body, configured for engagement with corresponding formations on another gear wheel or with links in a chain to provide positive rotational engagement between the rotating body and the other gear wheel or chain. The terms thus defined refer generically to gears, cogs and sprockets of all kinds, and their corresponding teeth.

Reference is made to gear teeth in each gear tooth sequence having a "uniform pitch". The "uniform pitch" here is defined functionally by the ability to mesh with a given idler gear or chain across the entire range of variable diameters of gear device 1000. It will be noted that the geometrical definition of the "pitch" is non-trivial since the radius of curvature of the tooth sequences varies between states, and thus the distance between the tips of adjacent teeth typically vary as the gear device is adjusted. Furthermore, the angular pitch between adjacent teeth necessarily varies as the radial position of the tooth sequences varies. As a non-limiting exemplary geometrical definition, in some cases, it may be advantageous to maintain a constant distance between the geometrical centers (defined as the intersection of the standard pitch circle and a center line of the tooth) of adjacent gear teeth during adjustment of the gear device. Nevertheless, various alternative implementations may equally provide the desired functionality of enabling meshing with a given idler gear over the entire range of variable diameters, and therefore also fall within the definition of "uniform pitch" according to the present invention.

Reference is made to an "effective number of teeth" of gear device 1000 in each state. The effective number of teeth in any given state is taken to be 2π divided by the angular pitch in radians between adjacent teeth about the axis of rotation. In intuitive terms, the effective number of teeth corresponds to the number of teeth that would be in a simple gear wheel which would function similarly to the current state of gear device 1000. In most cases, where the teeth of each gear tooth sequence are aligned in-phase with other teeth, the effective number of teeth is simply the number of teeth of the combined gear tooth set as projected along the axis.

Reference is made to a "gear tooth sequence". This refers generically to any strip, chain or other support structure which maintains the required spacing between the teeth around the periphery of the gear device in its various different states.

Finally with regard to definitions, reference is made to a "degree of peripheral coextension" between two gear tooth sequences. the degree of peripheral coextension corresponds to the angular extent of coextension of the gear tooth sequences around the periphery of the effective cylindrical gear, independent of the current diameter of the cylinder. When reference is made to a variable degree of peripheral coextension, this includes the possibility of the coextension being reduced to zero, i.e., where one tooth sequence provides one tooth and another provides the next tooth without any overlap therebetween.

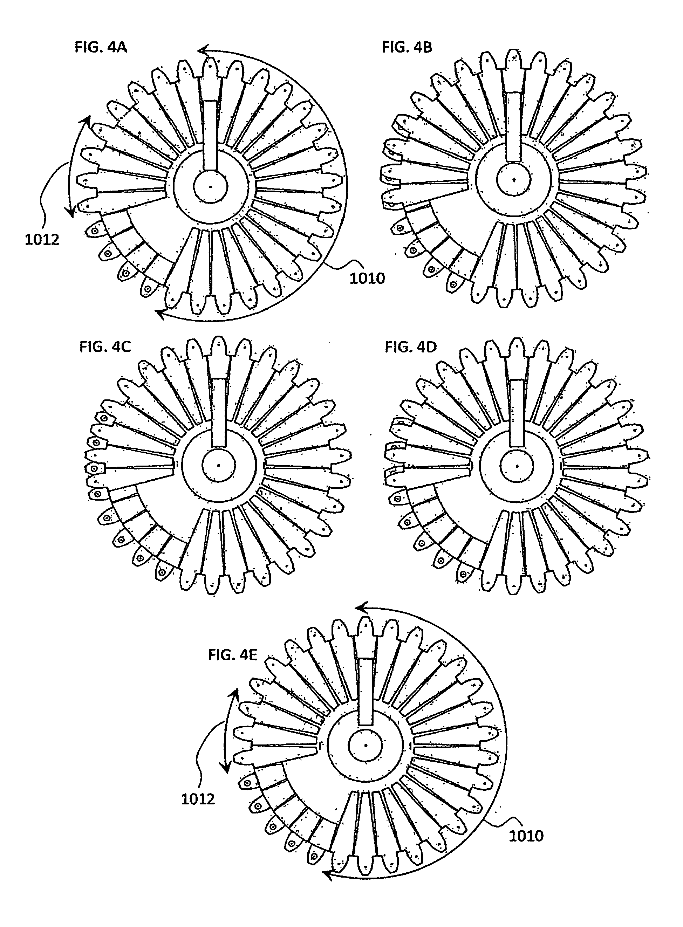

Turning now to Figures 4A-4E, this shows a sequence illustrating a transition from one state of gear device **1000** to another state, in this case incrementing the effective number of teeth by one. It will be noted that, in the region of variable overlap **1012,** the teeth of the tooth sequences become momentarily misaligned (Figures 4B, 4C and 4D) until they realign in their new positions. It is therefore important that the transition be performed during a fraction of a revolution of gear device **1000,** while the idler gear or chain is engaged only with other parts of the effective gear provided by the device. A control system for ensuring correct synchronization of the transition will be described below.

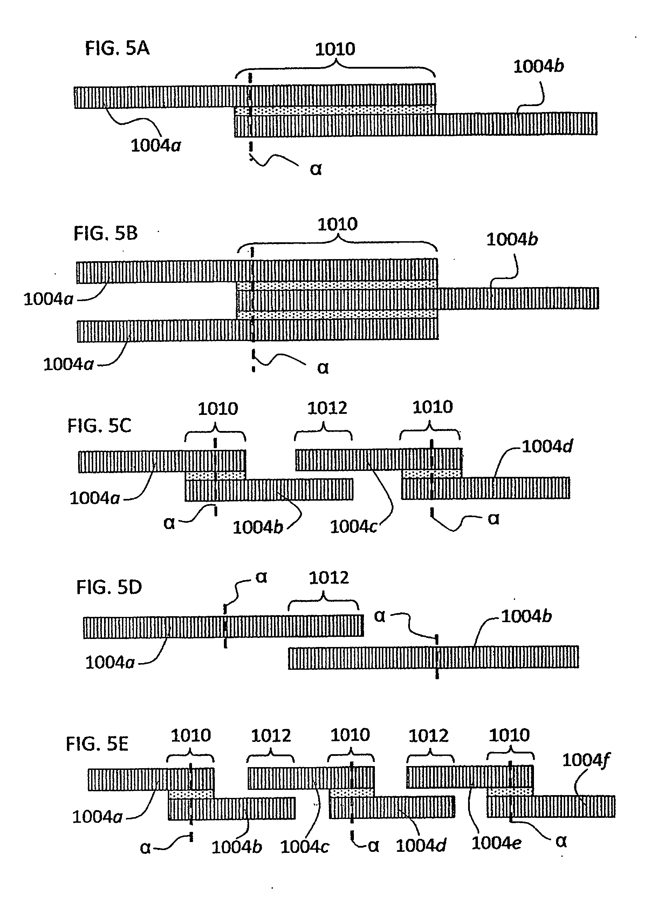

Turning now to Figures 5A-5E, these show a number of non-limiting options for layout of tooth sequences to form gear tooth set **1004.** Specifically, Figure 5A shows a layout equivalent to that of Figures 1A-4B in which two tooth sequences **1004*a*** and **1004*b*** are interconnected at a region of fixed overlap **1010** and each has a free end which, when wrapped around the variable diameter structure of gear device **1000,** forms a variable degree of overlap, i.e., has a variable degree of peripheral coextension, with the other when forming an effective cylindrical gear structure. It should be noted that the tooth sequences may be fused at region **1010** into a single tooth sequence with gear teeth across its entire width, and that the width of region **1010** need not be uniform and need not correspond to the combined width of the two separate tooth sequences **1004*a*** and **1004*b*.**

Also marked on Figure 5A is a location "α" to which is connected a mechanical linkage (to be described below) of diameter changer **1008.** This mechanical linkage transfers a turning moment between the axle and gear tooth sequences **1004*a*** and **1004*b*,** thereby providing the torque transfer between the axle and an interlocking gear. It will be noted that the angular position of the gear teeth of gear tooth sequences **1004*a*** and **1004*b*** vary in their angular position about the axle. This is clearly evident from comparing Figures 1A, 2A and 3A where the angular extent of the periphery circumscribed by gear tooth sequence **1004*a*** varies greatly. For this reason, certain preferred implementations of the present invention employ a localized mechanical linkage to a location "α" of the gear tooth sequence, and peripheral forces between the tooth or teeth adjacent to location α and other teeth are transferred along the internal structure of the gear tooth sequence. It should be noted that a more direct mechanical linkage of each individual gear tooth at each required position to the axle, although typically more difficult to achieve, also falls within the scope of the present invention.

Figure 5B illustrates a configuration functionally equivalent to that of Figure 5A, but in which gear tooth sequence **1004*a*** is doubled up and deployed symmetrically on each side of gear tooth sequence **1004*b*.** The symmetry of this arrangement may be advantageous in certain implementations of the present invention.

Figure 5C shows an alternative arrangement which has two mechanical linkages at locations α set **180** degrees apart, and two separate regions of variable overlap, i.e., with a variable degree of peripheral coextension. In this case, the gear tooth sequences are designated **1004*a*-1004*d*.** When deployed, the two locations α remain fixed 180 degrees apart while the overlap of the gear tooth sequence ends varies to provide the variable effective number of teeth.

The arrangement of Figure 5D is functionally equivalent to that of Figure 5C, but employs a single gear tooth sequence **1004*a*** or **1004*b*** attached to each location α. The arrangement of Figure 5E is similar to that of Figure 5C, but employs three locations α set at angles separated by 120 degrees, and three regions of variable overlap. In this case, the gear tooth sequences are designated **1004*a*-1004*f*.**

In each case, with regard to the location α, it should be noted that the motion of this portion of the gear tooth sequences is not necessarily purely radial, and may have an arcuate or more complex path of motion as the effective diameter and effective number of teeth are changed. Furthermore, the location α need not necessarily correspond to a particular tooth, but may instead fall between two teeth.

Although illustrated herein as two or more tooth strips which are juxtaposed along the axial direction of gear device **1000,** it should be noted that the regions of fixed and variable overlap are defined only as viewed along the axial direction, and that the tooth sequences may in fact be spaced apart significantly along the axis.

In order to transfer forces along the length of the tooth sequences, each tooth sequence is preferably implemented as a strip of gear teeth interconnected so as to maintain the aforementioned uniform pitch while accommodating a variable radius of curvature between the various states of gear device **1000.** Suitable structures for interconnecting the gear teeth to form gear tooth sequences include, but are not limited to, various types of direct hinged interconnections between the teeth, and various linked-chain-type support structures which may be fixedly attached or connected by lateral pins to the individual gear tooth elements. The strip of gear teeth is preferably configured to limit the maximum and minimum curvature of the strip to roughly the range required .to accommodate variations between the maximum and minimum diameter of gear device **1000.**

It is a particularly preferred feature of certain implementations of the present invention that the diameter changer **1008** is configured to position all of the gear teeth of gear tooth set **1004** on a virtual cylinder coaxial with axle **1002** in each state of gear device **1000**. The circular geometry allows gear device **1000** to be used in continuous engagement with a complementary gear wheel and, in the case of chain-based transmission systems, also avoids the shortcomings of the non-circular transmission elements of the prior art discussed above.

The present invention encompasses any and all implementations of the diameter changer which achieve the required motion of gear tooth set **1004** between the different states required. By way of non-limiting examples, it will be appreciated that various known mechanisms for generating variable- diameter pulleys or other cylindrical structures may be arranged to support gear tooth set **1004,** thereby serving as a basis for the diameter changer. For example, US Patent No. 5,830,093 to Yanay discloses an arrangement of slotted disks which provide controlled radial motion of a set of parallel rods, thereby approximating to a variable diameter cylinder. If gear tooth set **1004** is wrapped around such a structure, or engaged in a track which moves together with the rods, the required changing of diameter can be achieved. Mechanical linkage to transfer torque to or from axle **1002** may be implemented simply by anchoring each tooth sequence at an appropriate location to one of the rods.

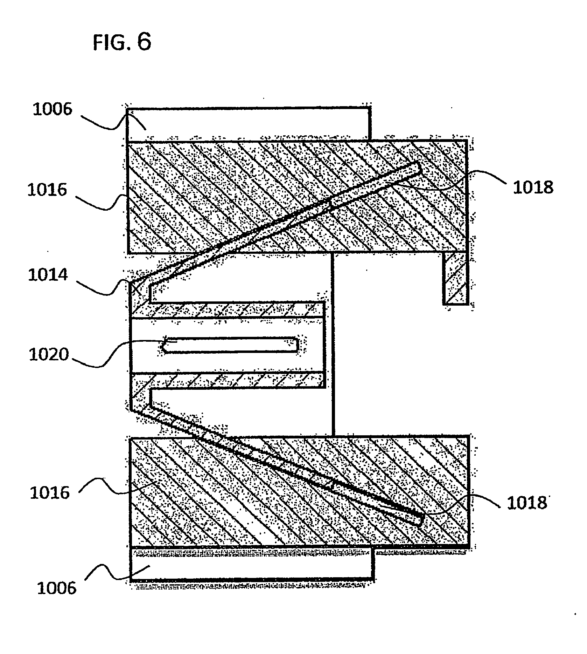

As an alternative preferred example, the present invention will be described further below with reference to various implementations which employ at least one, and typically two, substantially conical elements, each engaged with at least one of the gear tooth sequences such that axial displacement of the substantially conical element changes a distance of the gear teeth of the at least one gear tooth sequence from the axis. A first such implementation is illustrated here schematically with reference to Figures 6-7B.

Referring specifically to Figure 6, there is shown part of a diameter changer including a conical element **1014** which exhibits a smooth conical surface, inside and out. Each gear tooth **1006** of the corresponding gear tooth sequence is formed with a supporting block **1016** which has a slot **1018** for receiving a corresponding part of conical element **1014.** The axial position of gear teeth **1006** is fixed by additional alignment features (not shown) while conical element **1014** is axially displaceable. As conical element **1014** moves inwards (to the right as shown), the conical element rides deeper into slots 1018 of supporting block **1016,** causing the tooth sequence (e.g., **1004a)** to move radially inward, while outward movement (to the left as shown) causes radially outward expansion of the tooth sequence. Slots **1018** are preferably implemented with a flat or low-curvature inward-facing surface and a higher curvature outward-facing surface to maintain a line-of-contact between slot **1018** and the range of curvatures of conical element **1014** which tooth **1006** encounters during radial motion.

Torque-transferring linkage between axle **1002** (here omitted for clarity) and the tooth sequence may be provided either by a pin-and-slot engagement between the conical element and one of teeth **1006** or by a separate radial sliding linkage directly between the axle and one of teeth **1006.** In the former case, linkage between the axle and conical element **1014** is typically achieved by engagement of a pin from the axle in a slot **1020** in the central cylindrical collar of conical element **1014.**

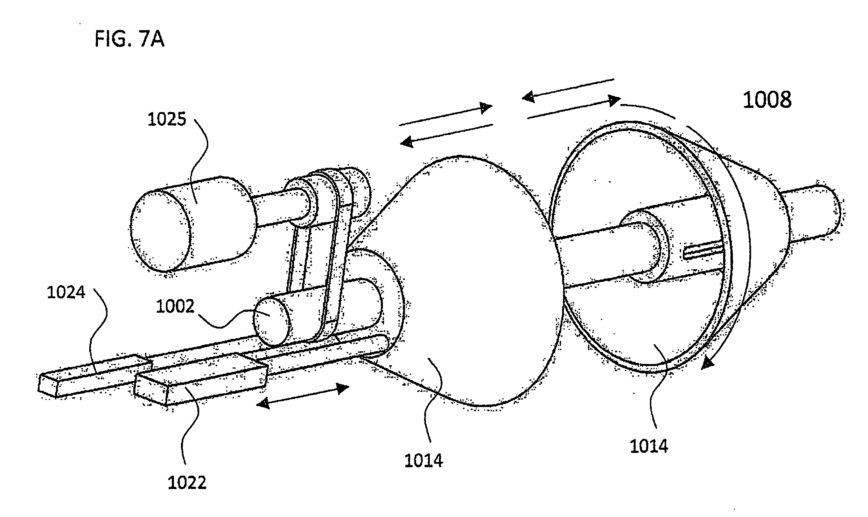

Figure 7A illustrates a diameter changer **1008** employing a pair of opposing conical elements **1014** as illustrated in Figure 6 which are used together to adjust a pair of gear tooth sequences (not shown) such as gear tooth sequences **1004a** and **1004b** of Figures 1A-5A above. Figure 7A also shows additional components of a control system for controlling operation of the diameter changer. Specifically, there are shown a linear actuator **1022** for displacing conical element **1014** axially to vary the diameter of the gear tooth sequence and an absolute linear encoder **1024** for determining the actual position of the conical element along the axis. A mechanical linkage (not shown) is provided to ensure that the two conical elements **1014** always move symmetrically, i.e., equally but in opposite directions. It will be noted that the linear position along the axis is directly related to the current effective diameter of gear device **1000** and is set only to values corresponding to an integer effective number of teeth. An axle rotation shaft encoder **1025** is deployed to measure the absolute rotational position of axle **1002** at all times.

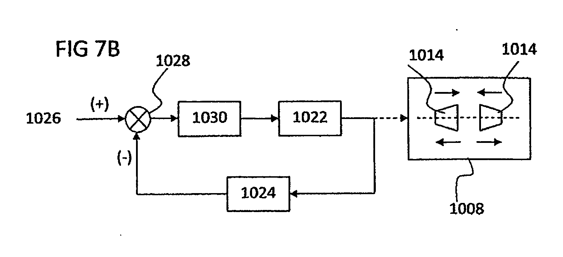

Figure 7B illustrates an exemplary implementation of a control loop for controlling this implementation of diameter changer **1008.** Here, an input signal **1026** indicative of the currently required diameter of gear device **1000** is fed to a differencer **1028** and then provided as an input to a driver **1030** which generates an output signal to linear actuator **1022,** thereby controlling motion of conical elements **1014.** Linear encoder **1024** provides negative feedback via differencer **1028,** thereby correcting the position of the conical elements in real time until the required position and the actual measured position match exactly.

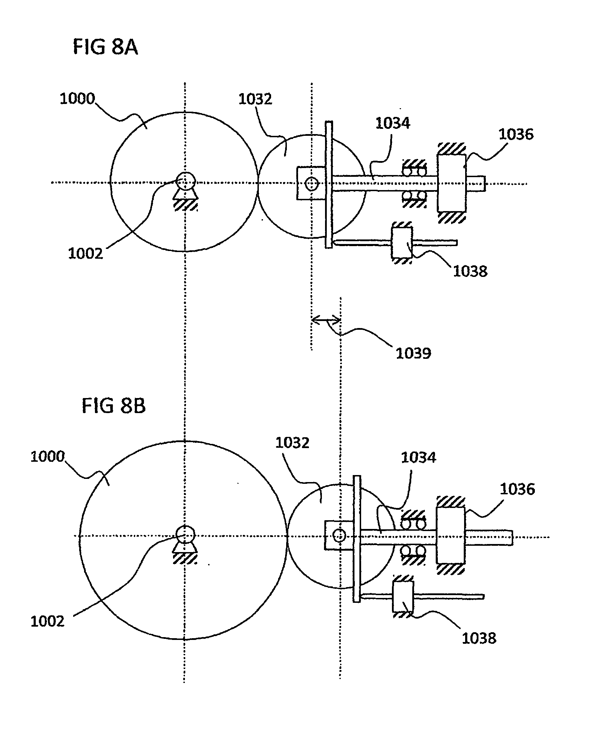

As mentioned earlier, the present invention is applicable both to direct-engagement gear-wheel-based transmission systems and to chain-based transmission systems. The above description with reference to Figures 1A-7B is equally applicable to both of these fields of applications. At this point, with reference to Figures 8A-9, further details relevant to direct-engagement gear-wheel-based systems will now be described.

Specifically, referring to Figures 8A and 8B, it will be noted that the variable diameter of gear device **1000** requires a variable distance between the axes of rotation of gear device **1000** and another gear wheel **1032** engaged therewith. To accommodate this variation in distance, gear wheel **1032** is preferably mounted on a displaceable platform, illustrated here schematically as platform **1034** which is displaced by an actuator **1036.** Actuator **1036** may be a linear actuator as illustrated here, or may generate an arcuate motion or any other motion which provides the required variation in spacing between the axes of rotation. An encoder, in this case a linear encoder **1038,** provides feedback as to the actual current position of gear wheel **1032.** Figure 8A illustrates the transmission system with gear device **1000** in a first state with a small effective diameter and gear wheel **1032** displaced towards axle **1002,** and Figure 8B illustrates the transmission system with gear device **1000** in a second state of larger effective diameter and gear wheel **1032** correspondingly displaced further from axle **1002.** The distance of the displacement is designated **1039.** Parenthetically, it should be noted that gear wheel **1032** may itself optionally be implemented as a gear device similar to gear device 1000, thereby providing an increased range of transmission ratios and partially offsetting the range of motion required between the axles.

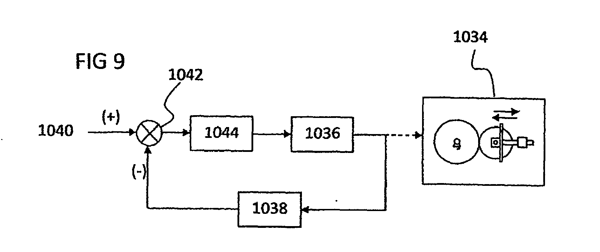

Figure 9 illustrates an exemplary implementation of a control loop for controlling motion of platform **1034.** An input signal **1040** indicative of the currently required spacing of axles between gear device **1000** and idler gear **1032** is fed to a differencer **1042** and then provided as an input to a driver **1044** which generates an output signal to actuator **1036,** thereby controlling motion of platform **1034.** Encoder **1038** provides negative feedback via differencer **1042,** thereby correcting the position of the platform in real time until the required position and the actual measured position match exactly.

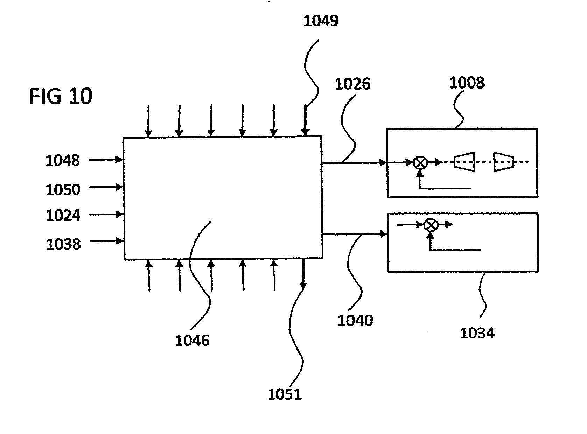

Turning briefly to Figure 10, it will be appreciated that a transmission system employing gear device **1000** will typically be implemented with a computerized control system, represented here schematically by a processor chip **1046.** In a simplest case, inputs to the control system will include a selector input **1048** indicating the currently requested transmission ratio and an input **1050** derived from shaft encoder **1025** to indicate the current angular position of axle **1002,** allowing synchronization of ratio shifting within the permitted region of rotation. The exact angular range within which shifting is permitted may be predefined in a look-up table stored in memory for each given state of gear device **1000,** or may be derived in real time by the control system by use of a suitably defined formula. The permitted angular range for state shifting is a function of the current diameter of the gear device, and may also depend on other factors such as the current angular velocity of the device. The angles are clearly also different for direct-engagement gear-based transmission systems and for chain-based transmission systems. The control system provides outputs to control the diameter transitions of gear device **1000** and the associated components, such as output **1026** to the control loop of Figure 7B and output **1040** to the control loop of Figure 9. The control system preferably also receives inputs generated by various other sensors, such as linear encoder **1024** and encoder **1038,** to provide verification that the transmission system is working properly.

In certain cases, the computerized control system may receive various additional inputs, and may also be configured to execute various algorithms specific to the intended application within which the transmission system is to be used. Additionally, or alternatively, the computerized control system may be configured to communicate by wired or wireless communication with other computers or external systems, for example, to provide automated transmission system control slaved to another system or device associated with the transmission system. Additional inputs and outputs may be provided for this purpose, such as telemetry input **1049** and telemetry output **1051.**

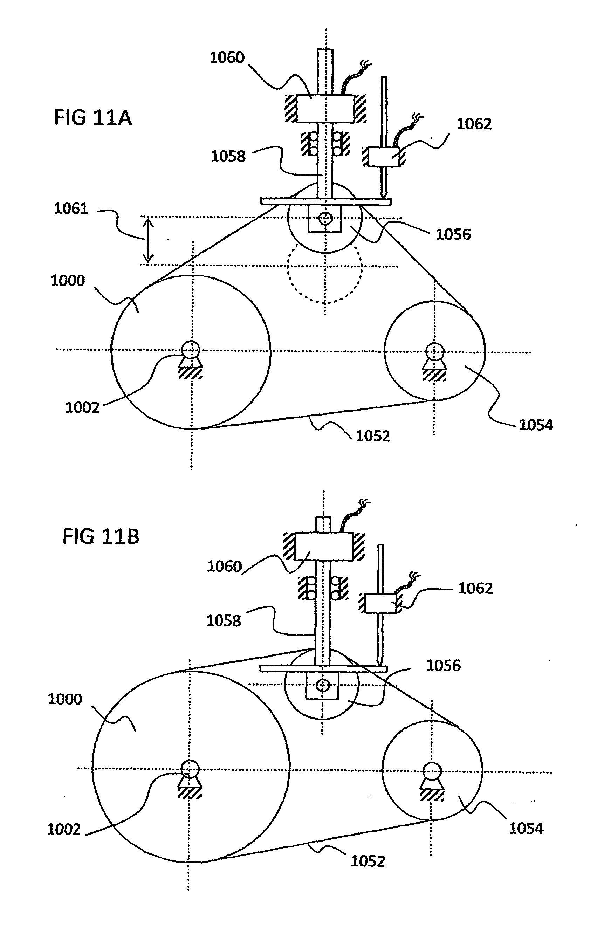

Turning now to Figures 11A-12, these parallel the content of Figures 8A-9, but instead present a chain-based transmission implementation. Thus, in this case, gear device **1000** is linked via a drive chain 1052 to turn a gear wheel 1054, which may itself be a conventional gear wheel or another gear device according to the teachings of the present invention. Figure 11A shows gear device **1000** in a first state with a relatively small diameter, while Figure 11B shows gear device **1000** in a second, larger diameter state. In order to maintain reliable engagement of drive chain **1052** which both gear wheels, a tensioning gear wheel **1056** is provided, mounted on a moving platform **1058** displaced by an actuator **1060** through a range of motion **1061.** An encoder **1062** measures the current position of platform **1058.**

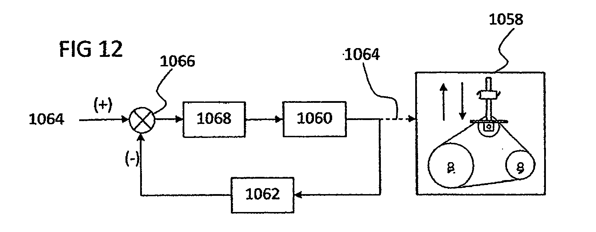

Figure 12 illustrates a possible control loop for controlling the movement of platform **1058.** An input signal **1064** indicative of the currently required position of platform **1058** is fed to a differencer **1066** and then provided as an input to a driver **1068** which generates an output signal to actuator **1060,** thereby controlling motion of platform **1058.** Encoder **1062** provides negative feedback via differencer **1066,** thereby correcting the position of the platform in real time until the required position and the actual measured position match exactly.

Implementation of a computerized control system for a chain-based transmission system as shown here may be essentially the same as that illustrated in Figure 10, with the input from encoder **1038** replaced by the input from encoder **1062** and the output **1040** replaced by the output **1064.**

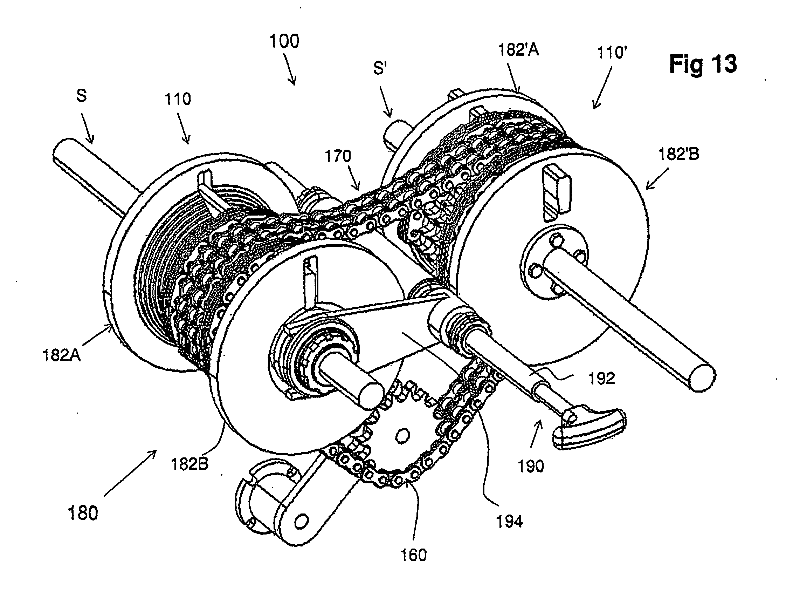

To complete the description, one particular exemplary embodiment will now be described in more detail with reference to Figures 13-22. This non-limiting example is arbitrarily shown in the context of a chain-based transmission system, but it will be readily apparent to one ordinarily skilled in the art that the structure is essentially equally applicable to directly-engaged gear-wheel transmission systems.

The embodiment of Figures 13-22 is primarily distinguished from the implementations described above by details of the diameter changer. Specifically, in this case, the diameter changer is based on a pair of stepped conical surfaces which are brought together or apart to change the effective diameter and effective number of teeth of the gear device.

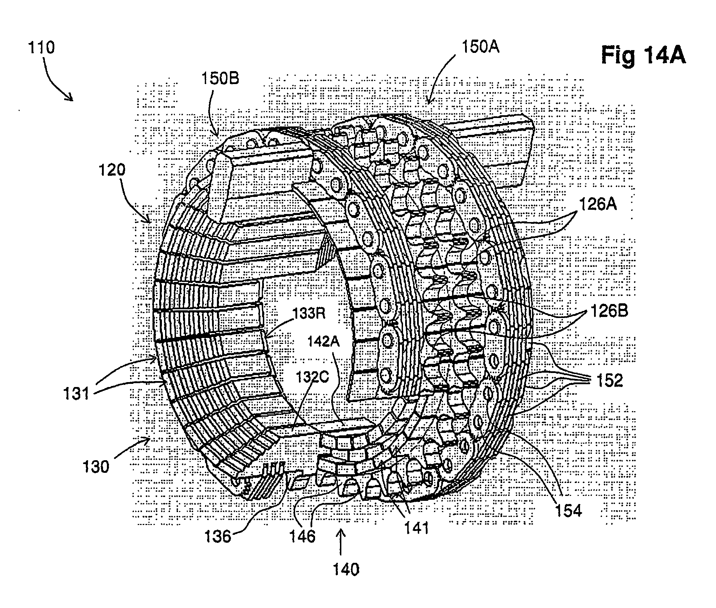

Referring to Figure 13, this shows an implementation with two similar variable diameter gear devices **110** and **110'** engaged with a common drive chain **170** in which tension is maintained by tension wheels **160.** The structure of this implementation of each gear device will be described in further detail with reference to Figures 14A-22.

Turning to Fig. 14A, a variable diameter gear device **110** is shown comprising a central segment **120,** two lateral segments **130, 140,** and a restricting arrangement **150.**

The central segment **120** is made of seventeen consecutive full base links **121,** each having an extension of a dimension **2W** along the axial direction. Each of the full base links **121** is formed with two teeth **126A, 126B**, so that two rows **124A** and **124B** of teeth are circumferentially formed. The first lateral segment **130** is formed of eight consecutive partial base links **131,** and the second lateral segment **140** is also formed of eight consecutive partial base links **141,** each of the partial base links **131, 141** having an extension W along the axial direction. Each of the partial base links **131, 141** is formed with one tooth **136, 146,** such that a single circumferential tooth row **134, 144** is formed on each lateral segment **130, 140** respectively.

The restricting arrangement **150** is adapted both for attachment of the base links **121, 131** and **141** to one another. The restricting arrangement **150** comprises a plurality of restricting plates **152** interconnected by a plurality of pins **154.** Every full base link **121** is fitted with six restricting plates **152,** three on each side thereof along the axial direction, and each partial base link is fitted with three restricting plates **152,** on one side thereof. Thus, all the base links **121, 131** and **141** are interconnected. The restricting arrangement is also adapted for performing pitch restriction, an operation that will be discussed in further detail later.

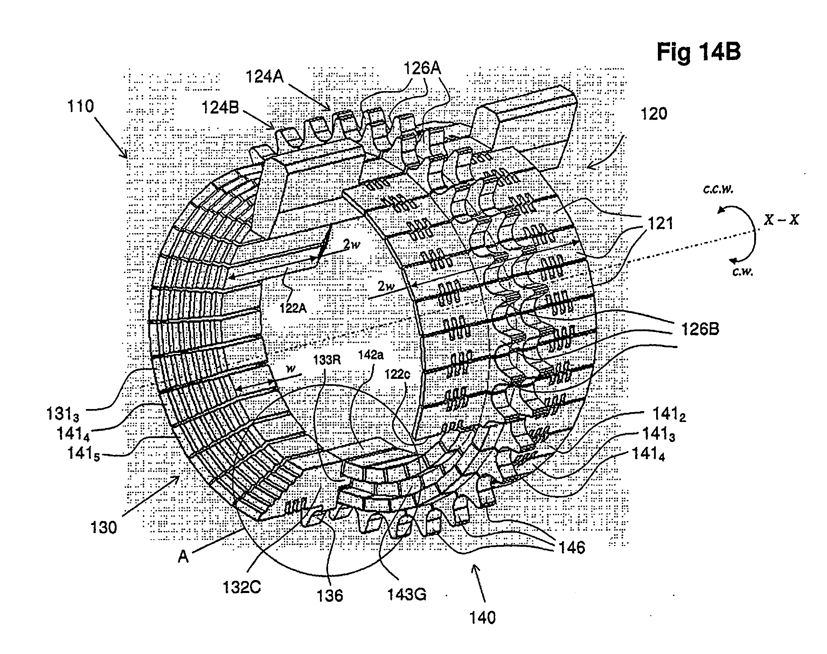

With reference to Fig. 14B, the gear device **110** is shown in an 'open' position, and is shown, for simplification purposes without the restricting arrangement **150** (shown Fig. 14A). In this position, the last partial base link **131₈** of the first lateral segment **130** is aligned with the last partial base link **141₈** of the second lateral segment **140.** Thus, the first and last base links **121₁, 121₁₇** may be considered to constitute the first and second end **122a, 122b** respectively of the central segment **120.** The last partial base links **131₈, 141₈** may be considered to constitute the free ends **132b, 142a** of the first and second lateral segments **130, 140** respectively, whereby the free end **132b** is spaced from the second end **122b** of the central segment **120,** and the free end **142a** is spaced from the first end **122a** of the central segment **120.**

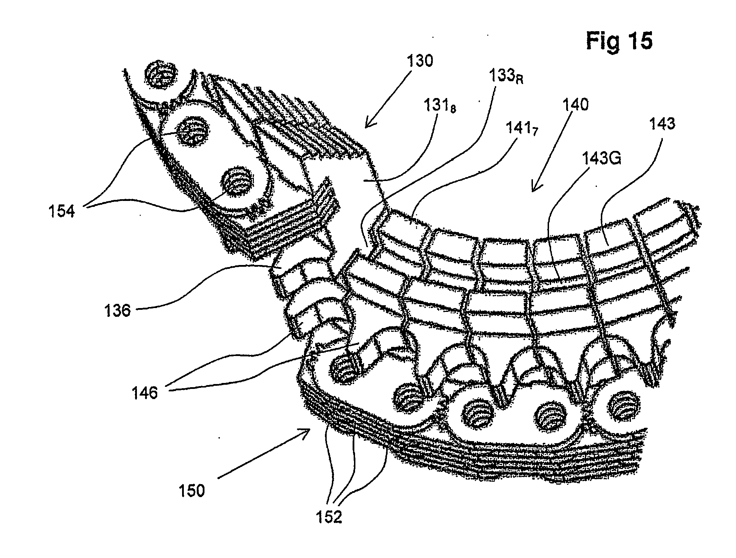

The first and second lateral segments **130, 140** are adapted to be engaged in the axial direction so as to allow the above mentioned sliding engagement in the circumferential direction, whereby the diameter of the gear device **110** may be varied. The engagement mechanism will be later discussed in detail with respect to Fig. 15.

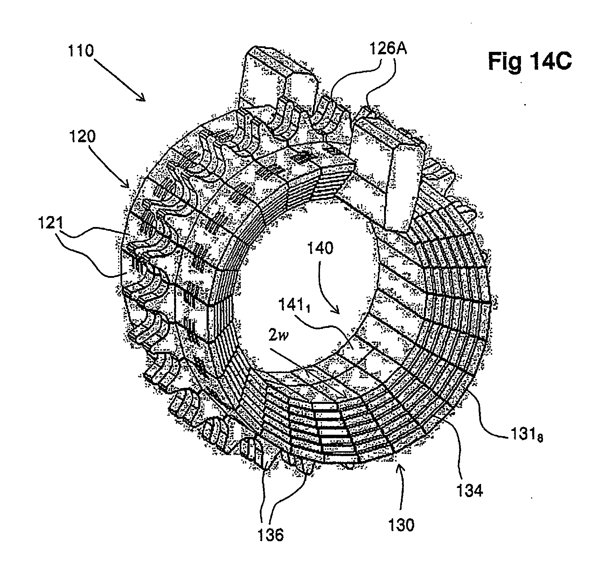

Thus, with reference to Fig. 14C, the gear device **110** is shown in a 'closed' position, and is shown, for simplification purposes without the restricting arrangement **150** as in Fig. 14B. In this position, the last partial base link **131₈** of the first lateral segment **130** is aligned with the first partial base link **141₁** of the second lateral segment **140,** and the first partial base link **131₁** of the first lateral segment **130** is aligned with the last partial base link **141₈** of the second lateral segment **140.** Thus, free end **132b** is adjacent the second end **122b,** and the free end **142a** is adjacent the first end **122a.**

### ENGAGEMENT MECHANISM:

Turning now to Fig. 15, an enlargement of the engagement area between the first and second lateral segment **130 140** is shown. The engagement is provided by the first lateral segment **130** being formed with a ridge **133R,** adapted to be received within a corresponding groove **143G** of the second lateral segment **140.** The ridge **133R** is constituted by protrusions 133 formed in each of the partial base links **131** of the first lateral segment **130,** and the groove **143G** is constituted by recesses formed in each of the partial base links **141** of the second lateral segment **140.**

The first lateral segment **130** is adapted to slide circumferentially with respect to the second lateral segment **140,** by the ridge **133R** sliding circumferentially within the groove **143G,** allowing changing the diameter of the gear device **110.**

### BASE LINK STRUCTURE:

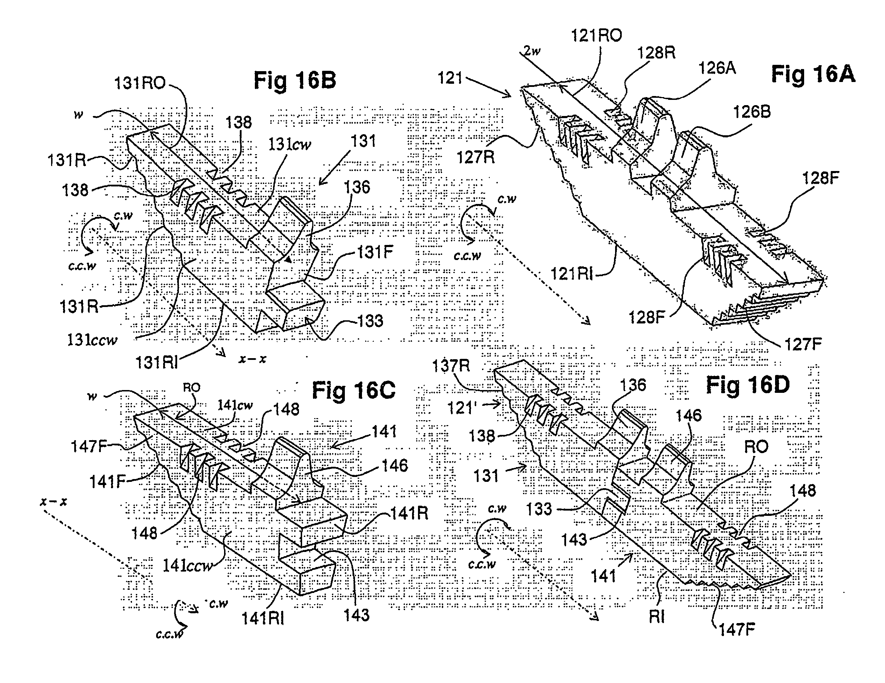

Turning to Fig. 16A, an isometric view of the full base links **121** constituting a part of the first lateral segment **120** is shown. The full base link **121** has an extension 2W along the axial direction. The full base link **121** is further formed with:
- a top surface **121RO** facing outward in the radial direction;
- a bottom surface **121RI** facing inward in the radial direction;
- a front surface **121F** facing the positive axial direction;
- a rear surface **121R** facing the negative axial direction;
- a right side surface **121CW** facing the C.W. (clockwise) direction with respect to the central axis X-X; and
- a left side surface 121CCW facing the C.C.W. (counterclockwise) direction with respect to the central axis X-X.

It would here be appreciated that the terms 'top', 'bottom', 'left' and 'right' are arbitrary terms due to the constant rotation of the gear device **110** in operation configuration. Therefore, the directions referred to hereinafter will be defined by the central axis, i.e. C.W., C.C.W. , RO and RI. However, 'front' and 'rear' directions, denote positive and negative axial direction respectively and will still be referred to as 'front' and 'rear'.

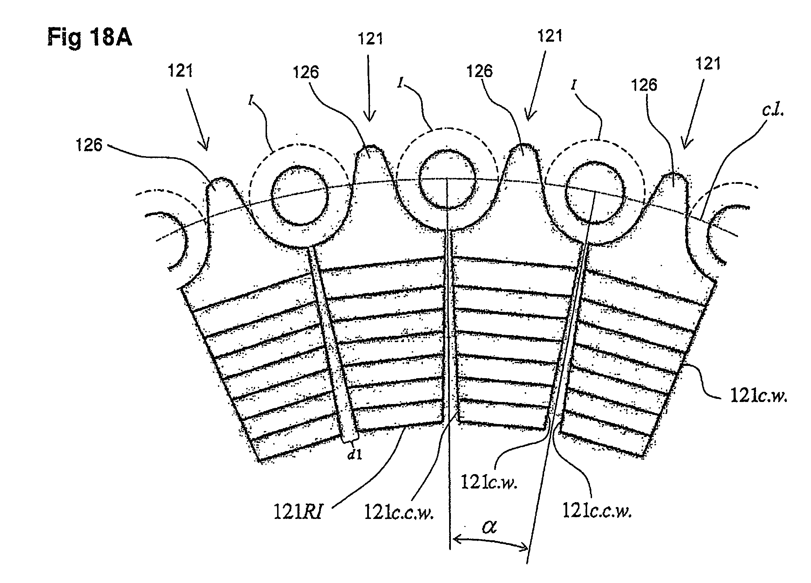

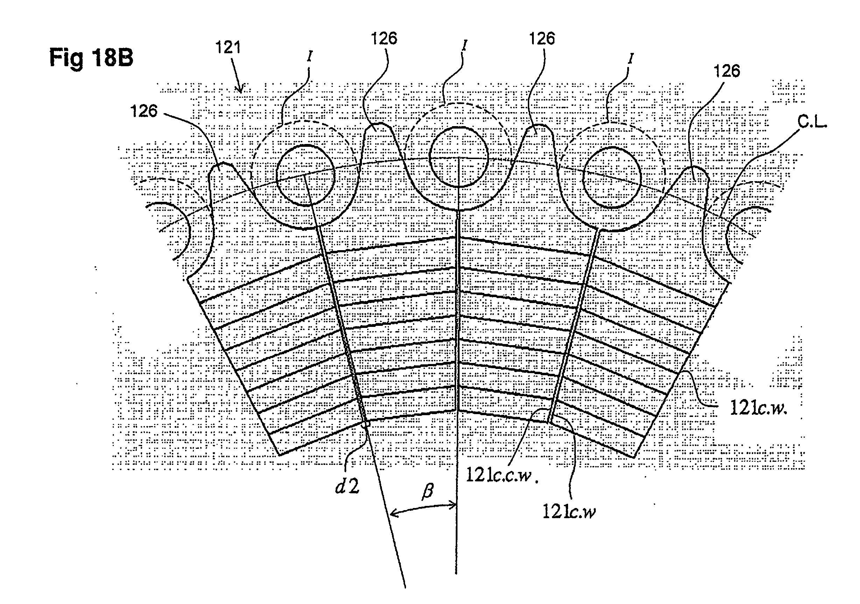

The surfaces **121F** and **121R** of the full base link **121** are each formed with an incremented slope **127F, 127R** respectively. The slopes **127F, 127R** are adapted for changing the diameter of the gear device **110.** The side surfaces **121CW** and **121CCW** are tapering towards the axis X-X. The function of the incremented slopes **127F, 127R** and of the tapering side surfaces **121CW** and **121CCW** will be discussed in detail with reference to Figs. 18A and 18B.

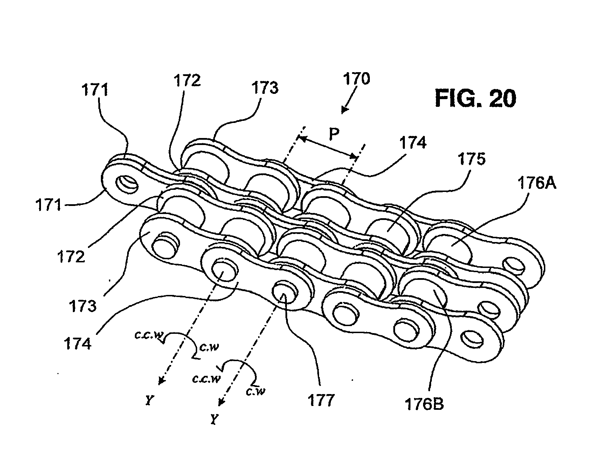

The full base link **121** is formed with two teeth **126A, 126B** protruding from the surface **121RO,** adapted to constitute a part of the teeth row **124A, 124B**, which is in turn adapted for mounting thereon at least a portion transmission chain (shown Fig. 20).

The full base link **121** further comprises two sets of slots - slots disposed adjacent the walls **121CW** and **121CCW** on the positive axial the full base link 121, and slots **128R** disposed adjacent the walls **121C' 121CCW** on the negative axial side of the full base link **121.** The slots 1 adapted to receive therein the restricting plates **152** as demonstrated previous figures.

Turning to Fig. 16B, an isometric view of the partial base lin constituting a part of the first lateral segment **130** is shown. The partia link **131** has an extension W along the axial direction. The partial base li is further formed with:
- a surface **131RO** facing outward in the radial direction;
- a surface **131RI** facing inward in the radial direction;
- a surface **131F** facing the positive axial direction;
- a surface **131R** facing the negative axial direction;
- a side surface **131CW** facing the **C.W.** direction with respect central axis **X-X;** and
- a side surface **131CCW** facing the **C.C.W.** direction with res the central axis **X-X.**

The surface **131R** of the partial base link **131** is formed w incremented slope **137R**. The slope **137R** is adapted for changing the di of the gear device **110.** The side surfaces **131CW** and **131CCW** are ta towards the axis **X-X.** The function of the incremented slope **137R** and of the tapering side surfaces **131CW** and **131CCW** will be discussed in detail with reference to Figs. 18A and 18B.

The partial base link **131** is formed with a tooth **136** protruding from the surface **131RO,** adapted to constitute a part of a tooth row **134,** which is in turn adapted for mounting thereon at least a portion of the transmission chain (shown Fig. 20).

The partial base link **131** is formed with a protrusion **133** protruding from the front surface **131F.** Therefore, the partial base link **131** will be referred to hereinafter as a male base link **131** and the first lateral segment will be referred to as a male lateral segment **130.** The protrusion **133** constitutes a part of the ridge **133R** adapted for engagement between the male lateral segment **130** and the second lateral segment **140.**

The male base link **131** further comprises a set of slots 138 disposed adjacent the walls **131CW** and **131CCW,** located near the negative axial end of the male base link **131.** The slots **138** are adapted to receive therein the restricting plates 152 as demonstrated in the previous figures.

Turning to Fig. 16C, an isometric view of the partial base links **141** constituting a part of the second lateral segment 140 is shown. The partial base link **141** also has an extension W along the axial direction. The partial base link **141** is, similarly to the male base link **131**, formed with:
- a surface **141RO** facing outward in the radial direction;
- a surface **141RI** facing inward in the radial direction;
- a surface **141F** facing the positive axial direction;
- a surface **141R** facing the negative axial direction;
- a side surface **141CW** facing the **C.W.** direction with respect to the central axis **X-X;** and
- a side surface 141CCW facing the **C.C.W.** direction with respect to the central axis **X-X.**

The surface **141F** of the partial base link **141** is formed with an incremented slope **147F.** The slope **147F** is adapted for changing the diameter of the gear device **110.** The side surfaces **141CW** and **141CCW** are tapering towards the axis **X-X.** The function of the incremented slope **147F** and of the tapering side surfaces **141CW** and **141CCW** will be discussed in detail with reference to Figs. 18A and 18B.

The partial base link **141** is formed with a tooth **146** protruding from the surface **141RO,** adapted to constitute a part of a tooth row **144,** which is in turn adapted for mounting thereon at least a portion of the transmission chain (shown Fig. 20).

The partial base link **141** is also formed with a recess **144** at the rear surface **141F** thereof. Therefore, the partial base link **141** will be referred to hereinafter as a female base link **141** and the second lateral segment will be referred to as a female lateral segment **140.** The recess **144** constitutes a part of the groove **143G** adapted for receiving the ridge **133R** of the male lateral segment **130.**

The female base link **141** further comprises a set of slots **148** disposed adjacent the walls **141CW** and **141CCW** located near the positive axial end of the female base link **141.** The slots **148** are adapted to receive therein the restricting plates **152** as demonstrated in the previous figures.

With reference to Fig. 16D, when a male base link **131** and a female base link **141** are aligned, i.e. the surfaces **131CW** and **141CW,** and surfaces **131CCW** and **141CCW** are flush with one another respectively, the male and female base links **131, 141** form a combines link **121'** having an essentially similar construction to that of the full base link **121** of Fig. **16A****.**

Reverting to Figs. **14B** and **14C****,** it may be observed that the gear device **110** shown in **Fig. 14B** comprises only one combined base link **121'** constituted by the last male and female links **131₈** and **141₈** of the male and female lateral segments **130, 140** respectively. On the other hand, with reference to Fig. 14C, all the male base links **131** of the male lateral segment **130** are aligned with the entire female base link **141** of the female lateral segment **140,** so as to form eight combined links **121'.**

### GEAR GEOMETRY AND PITCH RESTRICTION:

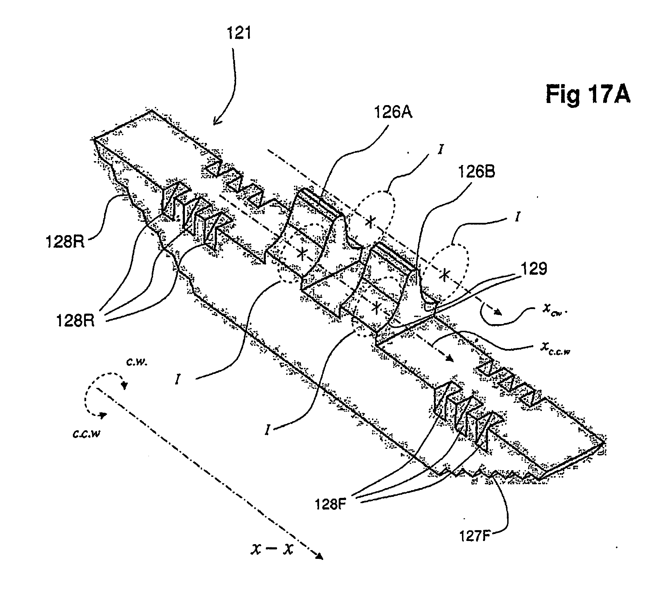

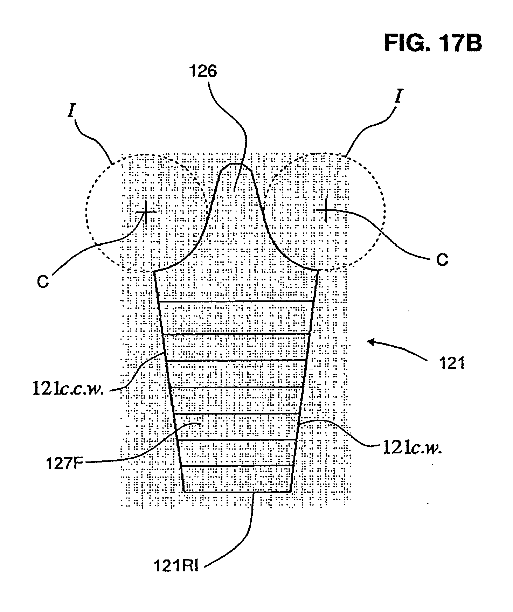

Turning now to Figs. 17A and 17B, every tooth **126** has two arcuate portions **129** at the base of the tooth **126** disposed on the **C.W.** and **C.C.W.** sides of the tooth **126.** Each of the arcuate portions **129** constitutes part of an imaginary circle **I,** having a center point **C.** The center-points **C** of two circles **I** on the **C.W.** side of the full base link **121** are aligned along an axis **X_{CW},** whereas the center-points **C** of two circles **I** on the **C.C.W.** side of the full base link **121** are aligned along an axis **X_{CCW}.** Each of the axes **X_{CW}** and **X_{CCW}** are essentially parallel to the main axis **X-X.** The distance along the circumferential direction between the center points **C** of the **C.W.** and **C.C.W.** circles of one base link determines the pitch of the gear device **110.**

Turning now to Figs. 18A and 18B, an enlarged portion of the gear device **110** is shown in both 'open' and 'closed' positions respectively. In both positions, spacing **d₁, d₂** respectively exists between each two adjacent base links **121** due to the tapering of the side surfaces **121CW** and **121CCW.** Alternatively, it may be considered that the angle between two adjacent base links **126** with respect to the main axis X-X varies from α to β while shifting from an 'open' to a 'closed' position respectively. The spacing between two adjacent base links prevents the base links **121, 131,** and **141** from colliding with one another during a change in diameter.

In each position, the curvature radius, defining the curvature of the gear device **110,** and consequently of each of the central, male and female segments **120, 130** and **140,** may be determined according to the radius of the curvature line **C.L.** which is a line representing an interpolation of a circle between all the centers **C** of the imaginary circles **I.**

In both the 'open' and the 'closed' position the full base links 121 are required to be arranged such that the circle **I** on the **C.W.** side of one full base link **121** is aligned with the circle **I** on the **C.C.W.** side of the adjacent full base link **121,** i.e. the centers **C** of these circles **I** coincide. This provides that the distance along the circumferential direction between each two centers **C** is essentially identical. Maintaining an identical distance between the centers **C** is imperative for operation of the gear device **110,** since the teeth **126, 136, 146** of the gear are adapted to receive thereon a transmission chain (shown Fig. 20), which has a constant pitch.

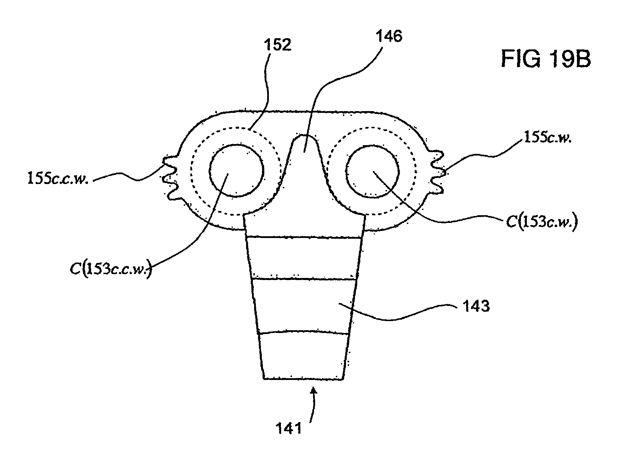

However, it would be appreciated that under normal circumstances, i.e. under no restriction, during a change in diameter, the base links would tend to displace such that the centers **C** of the **circles I** would fall out of alignment with one another. The restricting arrangement **150** is adapted for maintaining the constant pitch, i.e. maintain coinciding of the centers **C,** as will now be explained with reference to Figs. 19A to 19C.

The restricting plate **152** is formed with two holes **153_{C.W.}** and **153_{C.C.W.,}** two cog portions **155_{C.W.}** and **155_{C.C.W.}** and two attachment portions **157_{C.W.}** and **157_{C.C.W.}.** The restricting link **152** has a thickness ***t*** along the axial direction. The restricting link **152** is shown mounted onto the female base link **141,** such that the attachment portions **157_{C.W.}** and **157_{C.C.W.}** thereof are received within the slots **148** of the female base link **141.** In this position, the centers of the holes **153_{C.W.}** and **153_{C.C.W.}** are aligned with the centers **C** of the imaginary circles **I** defined by the arcuate portions **129** of the tooth **146.**

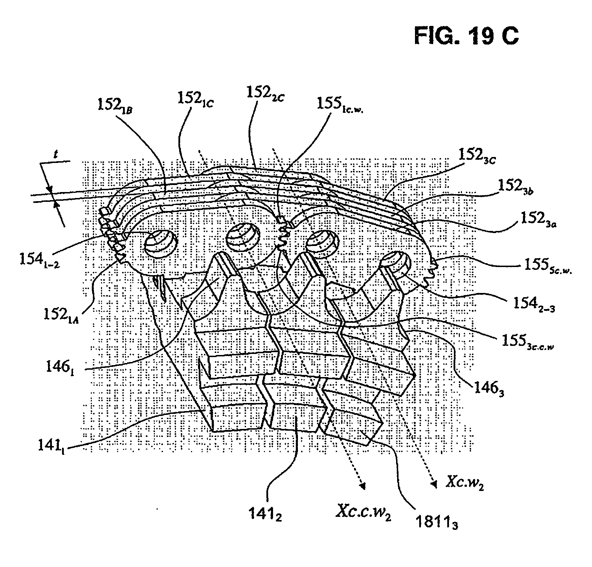

Turning to Fig. 19C, the female base links **141₁** to **141₃** are each mounted with three restricting plates **152₁ₐ** to **152_{1c}, 152₂ₐ** to **152_{2c}** and **152₃ₐ** to **152_{3c}** thereon respectively, having a spacing ***t*** along the axial direction therebetween. Thus, when the restricting plates **152** are interconnected, the restricting plates **152_{1b}** and **152_{1c}** are received within the spaces ***t*** of the restricting plates **152₂ₐ** to **152_{2c}** of the second female link **141₂.** In this position, the cog portions **155_{1C.W.}** of the restricting plates **152** mounted on the first female base link **141₁** mesh with the cog portions **155_{3C.C.W.}** of the restricting plates **152** mounted on the third female base link **141₃.**

In addition, when the restricting plates **152** are interconnected by the pins **154,** the central axis of the pins **154₁₋₂** and **154₂₋₃** are aligned with the holes **153_{1C.W.}** and **153_{2C.C.W.},** and **153_{2C.W.}** and **153_{3C.C.W.}** respectively. This consequently leads to alignments with the centers **C** of the circles **I.** It would also be appreciated that the restricting arrangement **150** is thus able to maintain a constant pitch ***P*** regardless of the shape and curvature taken on by each segment **120,130,** and **140** of the gear device **110.**

Turning to Fig. 20, a standard double transmission chain **170** is shown comprising a set of chain plates **171-174,** a set of rollers **176_{A}** and **176_{B}** mounted correspondingly on a set of holding pins **177** as known *per se.* The axis **Y** of each holding pin **177,** and consequently of each roller **176_{A},** 176_{B} maintain a fixed distance therebetween referred to as the pitch ***P*.** The pitch P remains essentially constant throughout the entire transmission chain **170.**

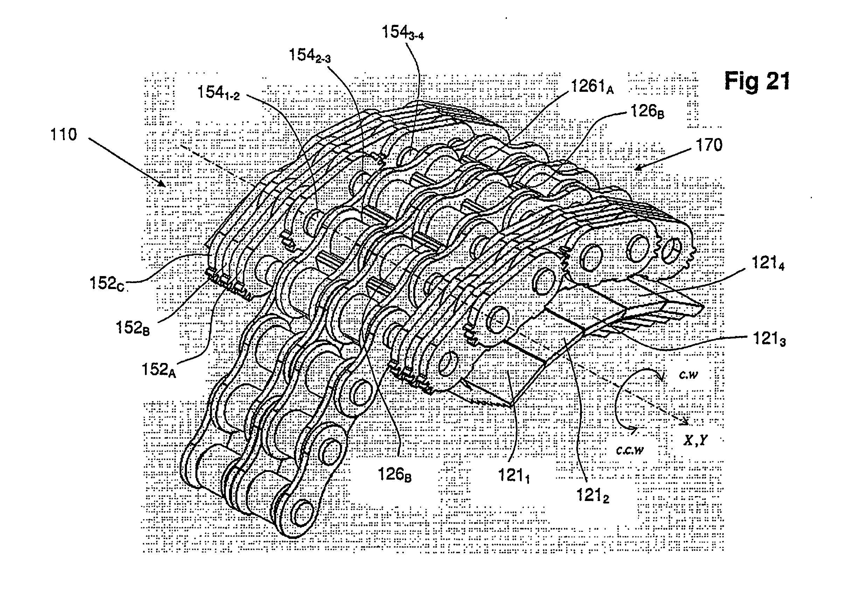

Turning now to Fig. 21, the transmission chain **170** is shown mounted on a portion of the gear device **110.** In this position, the central axes **Y** of the rollers **176** of the transmission chain **170,** the centers **C** of the circles **I** of the teeth **126,** the holes **153** of the restricting plates **152** and the axes **x** of the connecting pins **154** are all aligned along a mutual axis. It would also be appreciated that since the pitch **P** remains essentially constant, the gear device **110** would always 'fit' the transmission chain **170.**

### DIAMETER CHANGING:

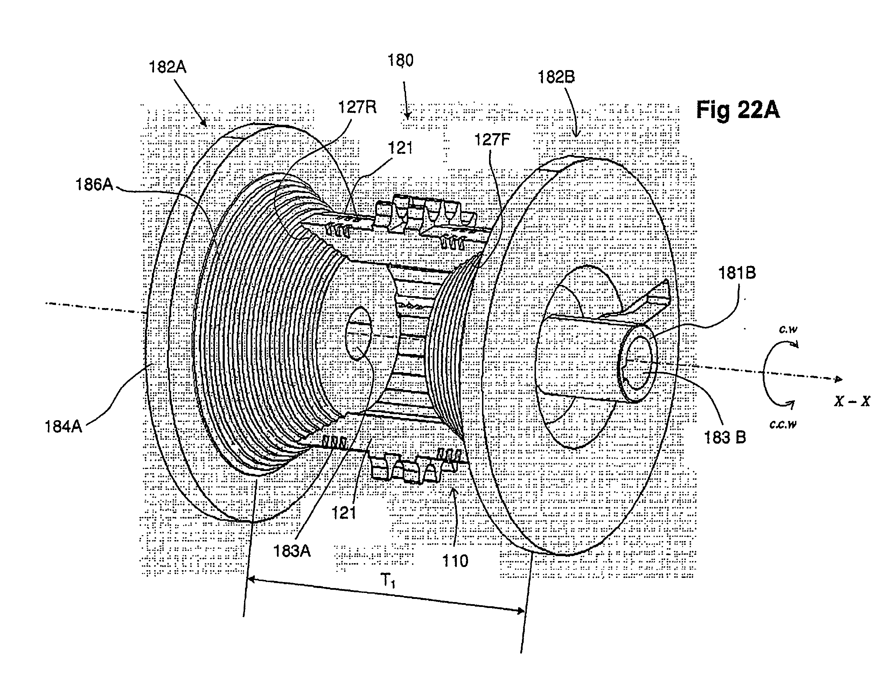

Turning to Figs. 22A an 22B, a diameter changing mechanism **180** is shown comprising two conical members **182A** and **182B** respectively, adapted for seating of the gear device **110** thereon, on the radially outward portion **RO** thereof. Each of the conical members **182** is formed with a base **184** and a conical incremented slope **186.** Each member is integrally formed with a cylindrical connector **181** having a bore **183** adapted to receive a driving shaft therein, to be rotated thereby.

When the gear device **110** is seated on the diameter changing mechanism **180,** each of the base links **121, 131** and **141** of each of the segments **120, 130** and **140** respectively is seated on the incremented slope **186,** such that the incremented slopes **127, 137, 147** thereof are mated with the incremented slope **186.**

In Fig. 22A, the gear device **110** is shown in an essentially 'closed' position, corresponding to the position shown in Fig. **14C****.** In this position, the bases **184** of the conical members **182** are at a distance **T₁** from one another, and the base links **121, 131** and **141** are positioned adjacent the axis **X-X** (at a distance corresponding to R=D₂/2). It would also be observed, that due to the spacing T₁ between the conical members **182A** and **182B,** the base links **121, 131** are seated one the incremented surface **186** in a location spaced from the base **184.**

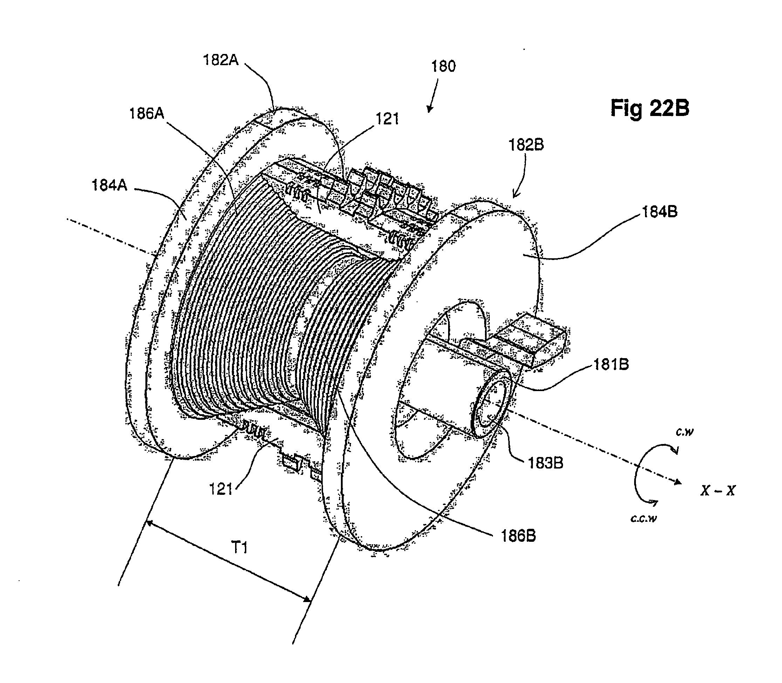

Turning to Fig. 22A, in order to increase the diameter of the gear device 110, the conical members **182** are brought closer together to a distance T₂ between the bases **184** thereof, such that the base links **121, 131** and **141** are forced to 'climb up', i.e. displace radially outwards. This in turn, leads to an increase in the diameter of the gear device **110.** Thus, as shown in Fig. **22B****,** the gear device **110** is in an essentially 'closed' position, corresponding to the position shown in Fig. **14****B.** In this position, the base links **121, 131** and **141** are positioned farther away from the axis **X-X** (at a distance corresponding to R=D₁/2). It would also be observed, that due to the essentially little spacing T₂ between the conical members **182A** and **182B,** the base links **121, 131** are seated one the incremented surface **186** in a location adjacent the base **184.**

In order to decrease the diameter of the gear device **110,** an essentially reverse operation is required, i.e. the conical members **182** are brought further apart to the distance T₁ between the bases **184** thereof, such that the base links **121, 131** and **141** are forced to 'climb down', i.e. displace radially inwards. As opposed to an increase in diameter, during a decrease, the base links **121, 131** and **141** are forced radially inward by the pressure of the transmission chain **170** mounted on the gear device **110.**

It would also be appreciated here that using the diameter changing mechanism 180 disclosed above, the gear device 110 may assume a variety of diameters, depending on the distance T between the bases 184 of the conical members 182. Thus, for example, the diameter may be increased/decreased by one increment at a time.

It would be appreciated that the incremented slope 186 of the conical members 182 and the incremented slopes 127, 137 and 147 of the base links 121, 131 and 141 respectively may be of various corresponding designs. Furthermore, the orientation of the conical members 182 with respect to one another as well as the manner in which they are operated (electrically, hydraulically etc.) may vary as well known in common practice.

### OPERATION:

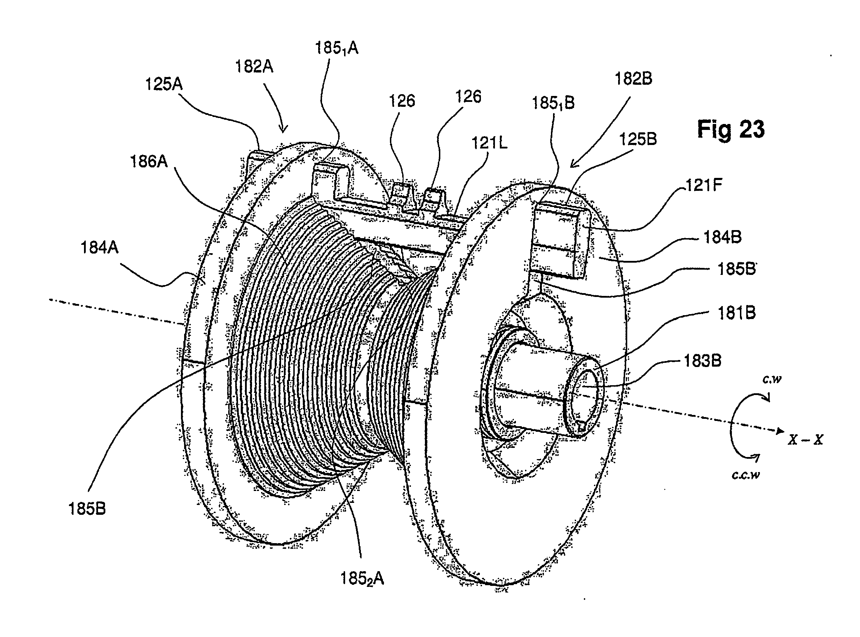

Turning now to Fig. 23, upon rotation of the conical members **182** by the driving shaft, torque is required to transfer from the conical members **182** to the gear device **110.** Thus, the diameter changing mechanism **180** also functions as a torque transferring mechanism.

For this purpose, each conical member **182** is further formed with a guiding slot **185** extending along the radial direction between a first closed end **185₁** and a second closed end **185₂** thereof. One of the base links **121L,** is formed with prolonged extensions **125A** and **125b** to form a rod, the extensions **125** being sufficiently long so as to be received within the guiding slot **185.** The extensions **125** are also designed to have a cross-section geometry corresponding to that of the guiding slot **185.**

In operation, upon rotation of the driving shaft, the conical members **182** are set in rotary motion. Since the extensions **125** are received within the guiding slot **185,** rotary motion of the conical members **182** entails a rotary motion of base link **121L.** In turn, since all the base links **121, 131,** and **141** are interconnected by the restricting arrangement **150,** rotary motions of the base link **121L,** entails the rotation of the entire gear device **110.**

Reverting to Figs. 22A and 22B, as previously described, upon changing the diameter of the gear device **110,** the base links **121, 131** and **141** are forced to 'climb up' or 'climb down' the incremented slopes **186** of the conical members **182.** However, 'climbing' of the gear device **110** in both directions is limited by the closed ends **185₁** and **185₂.** Thus, when increasing the diameter of the gear device **110,** the base link **121L** is able 'climb up' only up to a point where the RO surface thereof abuts the closed end **185₁,** and when decreasing the diameter of the gear device **110,** the base link **121L** is able 'climb down' only up to a point where the RI surface thereof abuts the closed end **185₂.** Limiting the movement of the base link **121L** reflects on all the gear device **110,** and therefore provides a diameter limitation thereto.

It would be appreciated that the length of the guiding slot **185** may be determined to correspond to the number of base link **121, 131** and **141** of the gear device **110,** and may be designed so as to allow, at the least, an overlap of a desired number of teeth **136, 146** between the first and second segment **130, 140** in the 'open' position. Furthermore, the guiding slot **185** may be designed such as to prevent the gear device **110** from assuming a diameter exceeding maximal diameter thereof, i.e. maintaining, at the least, an overlap of one tooth **136, 146** between the first and second segment **130, 140** respectively, in the 'open' position.

### COMBINED OPERATION:

It will be appreciated that gear device **110,** with suitable adaptation of the form of the teeth used, may be used in any and all configurations of a transmission system according to the present invention, including a direct-engagement gear-wheel transmission as illustrated above with reference to Figures 8A-9 and a chain-based transmission system as illustrated above with reference to Figures 11A-12. Furthermore, as mentioned above, these system may each be implemented using a single gear device according to the present invention, or using two or more thereof.

Referring now again to Fig. 13, a transmission assembly **100** is shown comprising two variable diameter segmented gear devices **110** and **110',** two diameter changing mechanisms **180** and **180',** a transmission chain **170,** a tension wheels **160,** a regulation arrangement **190,** and two shafts S and S'.

In assembly, the conical members **182** are mounted on the driving shaft S, and the conical members **182'** are mounted on the driven shaft S'. The gear devices **110, 110'** are seated on the corresponding conical members **182** and **182'** respectively. The transmission chain **170** is mounted on the gear devices **110, 110'** and the pension wheel **160** is placed so as to provide tension in the transmission chain **170.**

The regulation arrangement **190** comprises a main shaft **192,** and is formed with an arm **194** which is articulated to the diameter changing arrangement **180.** The regulation arrangement **190** is adapted to pull the conical members **182** apart, or bring them closer together so as to change the diameter of the gear device **110.** This is achieved by displacing the arm **194** along the axial direction.

According to a specific design (not shown), the diameter regulation arrangement **190** may also be connected in a similar matter, i.e. using an arm **194'** (not shown), to the second gear device **110',** thereby maintaining a corresponding change of the diameter of the second gear device **110'** upon a change in diameter of the first gear device **110.**

However, it would be readily appreciated that each of the gear devices **110, 110'** may be fitted with an individual regulation arrangement **190, 190'** respectively, allowing each gear device **110, 110'** to change its diameter irrespective of the other. This, in turn, may provide a wide variety of transmission ratios.

It will be appreciated that the above descriptions are intended only to serve as examples, and that many other embodiments are possible within the scope of the present invention as defined in the appended claims.

## Claims

1. A variable diameter gear device (1000; 110, 110') for use in a variable ratio transmission system, the variable diameter gear device (1000; 110, 110') comprising:
(a) an axle (1002; S, S') defining an axis of rotation;
(b) a gear tooth set (1004; 124A, 124B) deployed around said axle (1002; S, S'), said gear tooth set (1004; 124A, 124B) including at least:
(i) a first displaceable gear tooth sequence (1004*a*; 124A) including a plurality of gear teeth (1006; 126A, 146) spaced at a uniform pitch, and
(ii) a second displaceable gear tooth sequence (1004*b*; 124B) including a plurality of gear teeth (1006; 126B, 136) spaced at said uniform pitch;
(c) a diameter changer (1008; 180) mechanically linked to said axle (1002; S, S') and to said gear tooth set (1004; 124A, 124B) so as to transfer a turning moment between said axle (1002; S, S') and said gear tooth set (1004; 124A, 124B), wherein
said diameter changer (1008; 180) is configured to displace said gear tooth set (1004; 124A, 124B) so as to vary a degree of peripheral coextension (1012) between at least said first and said second gear tooth sequences (1004*a*, 1004*b*; 126A, 146, 126B, 136), thereby transforming the gear device (1000; 100, 100') between:
(i) a first state in which said gear tooth set (1004; 124A, 124B) is deployed to provide an effective cylindrical gear with a first effective number of teeth, and
(ii) a second state in which said gear tooth set (1004; 124A, 124B) is deployed to provide an effective cylindrical gear with a second effective number of teeth greater than said first effective number of teeth;
**characterized in that** said variable diameter gear device further comprises
an idler gear wheel (1032) deployed for rotation about an idler axle, said idler gear wheel (1032) including a plurality of gear teeth configured for engaging said gear tooth sequences (1004*a*, 1004*b*; 126A, 146, 126B, 136); and
an idler displacer (1036) associated with said idler axle and configured to move said idler axle so as to maintain engagement of said idler gear (1032) wheel with said gear tooth set (1004; 124A, 124B) in both said first and said second states.

2. The device (1000; 110, 110') of claim 1, wherein said diameter changer (1008; 180) is further configured to displace said gear tooth set (1004; 124A, 124B) so as to vary a degree of peripheral coextension (1012) between at least said first and said second gear tooth sequences (1004*a*, 1004*b*; 126A, 146, 126B, 136) so as to selectively transform the gear device (1000; 110, 110') to each of a plurality of intermediate states each providing an effective cylindrical gear with a corresponding integer effective number of teeth assuming a value between said first and said second effective numbers of teeth.

3. The device (1000; 110, 110') of claim 1, wherein said diameter changer (1008; 180) is configured to position all of said gear teeth of said gear tooth set (1004; 124A, 124B) on a virtual cylinder coaxial with said axle (1002; S, S') in each of said first and said second states.

4. The device (1000; 110, 110') of claim 1, wherein each of said tooth sequences (1004*a*, 1004*b*; 126A, 146, 124B, 136) is implemented as a strip of gear teeth interconnected so as to maintain said uniform pitch while accommodating a variable radius of curvature between said first and said second states.

5. The device (1000; 110, 110') of claim 4, wherein said diameter changer (1008; 180) transfers a turning moment between both said first and said second gear tooth sequences (1004*a*, 1004*b*) and said axle (1002; S, S') via a single mechanical linkage.

6. The device (1000; 110, 110') of claim 4, wherein said diameter changer (1008; 180) transfers a turning moment between said first and said second gear tooth sequences (1004*a*, 1004*b*; 126A, 146, 124B, 136) and said axle (1002; S, S') via separate mechanical linkages angularly spaced around said axle (1002; S, S').

7. The device (1000; 110, 110') of claim 4, wherein said gear tooth set (1004; 124A, 124B) has a single region (1012) with a variable degree of peripheral coextension between said gear tooth sequences (1004*a*, 1004*b*; 126A, 146, 124B, 136).

8. The device (1000; 110, 110') of claim 4, wherein said gear tooth set (1004; 124A, 124B) has a plurality of regions (1012) with a variable degree of peripheral coextension between said gear tooth sequences (1004*a*, 1004*b*; 126A, 146, 124B, 136).

9. The device (1000; 110, 110') of claim 1, wherein said diameter changer (1008; 180) includes at least one substantially conical element (1014; 182) engaged with at least one of said gear tooth sequences (1004a, 1004b; 126A, 146, 124B, 136) such that axial displacement of said substantially conical element (1014; 182) changes a distance of said gear teeth of said at least one gear tooth sequence (1004*a*, 1004*b*; 126A, 146, 124B, 136) from said axis.

10. The device (1000; 110, 110') of claim 1, wherein said diameter changer (1008; 180) includes at least one pair of slotted disks associated with said axle (1002; S, S'), and a plurality of pins associated with at least one of said gear tooth sequences (1004*a*, 1004*b*; 126A, 146, 124B, 136) and engaged in said slots, said slotted disks being configured such that relative rotation of said slotted disks about said axis changes a distance of said gear teeth of said at least one gear tooth sequence (1004*a*, 1004*b*; 126A, 146, 124B, 136) from said axis.

11. The device (1000; 110, 110') of any preceding claim, wherein said diameter changer (1008; 180) includes a sensor deployed to generate an output indicative of an effective diameter of the variable diameter gear device, said diameter changer (1008; 180) being responsive to said output to adjust said gear tooth set (1004; 124A, 124B) to provide an effective cylindrical gear with an integer effective number of teeth.

12. The device (1000; 110, 110') of any preceding claim, wherein said diameter changer (1008; 180) includes:
(a) a sensor deployed to generate an output indicative of a current angular position of said axle (1002; S, S'); and
(b) a controller responsive to said output to selectively perform said transforming while said axle (1002; S, S') is within a permitted range of angular positions.

13. The device (1000; 110, 110') of any preceding claim, wherein the gear tooth set (1004; 124A, 124B) allows continuous toothed engagement around the entire periphery of the effective cylindrical gear wheel in all states of the gear tooth set (1004; 124A, 124B).

## Patentansprüche

1. Eine Getriebevorrichtung (1000; 110, 110') mit variablem Durchmesser zur Verwendung in einem stufenlosen Getriebesystem, wobei die Getriebevorrichtung (1000; 110, 110') mit variablem Durchmesser Folgendes umfasst:
(a) eine Achse (1002; S, S'), die eine Drehachse bestimmt;
(b) einen Getriebezahnsatz (1004; 124A, 124B), der um die Achse (1002; S, S') herum angeordnet ist, wobei der Getriebezahnsatz (1004; 124A, 124B) mindestens Folgendes einschließt:
(i) eine erste verschiebbare Getriebezahnsequenz (1004*a*; 124A), die eine Vielzahl von Getriebezähnen (1006; 126A, 146) einschließt, welche mit einer einheitlichen Teilung beabstandet sind, und
(ii) eine zweite verschiebbare Getriebezahnsequenz (1004*b*; 124B), die eine Vielzahl von Getriebezähnen (1006; 126B, 136) einschließt, welche mit der einheitlichen Teilung beabstandet sind;
(c) eine Vorrichtung zur Veränderung des Durchmessers (1008; 180), der mechanisch mit der Achse (1002; S, S') und mit dem Getriebezahnsatz (1004; 124A, 124B) verbunden ist, um so ein Drehmoment zwischen der Achse (1002; S, S') und dem Getriebezahnsatz (1004; 124A, 124B) zu übertragen, worin
die Vorrichtung zur Veränderung des Durchmessers (1008; 180) ausgebildet ist, um den Getriebezahnsatz (1004; 124A, 124B) zu verschieben, um so einen Grad der peripheren Koextension (1012) zwischen mindestens den ersten und den zweiten Getriebezahnsequenzen (1004*a*, 1004*b*; 126A, 146, 126B, 136) zu variieren und so die Getriebevorrichtung (1000; 100, 100') zu versetzen zwischen:
(i) einem ersten Zustand, in dem der Getriebezahnsatz (1004; 124A, 124B) positioniert wird, um ein effektives Stirnrad mit einer ersten effektiven Anzahl von Zähnen bereitzustellen, und
(ii) einem zweiten Zustand, in dem der Getriebezahnsatz (1004; 124A, 124B) positioniert wird, um ein effektives Stirnrad mit einer zweiten effektiven Anzahl von Zähnen bereitzustellen, die größer ist als die erste effektive Anzahl von Zähnen;
**dadurch gekennzeichnet, dass** die Getriebevorrichtung mit variablem Durchmesser weiter Folgendes umfasst:
ein Zwischenzahnrad (1032), positioniert zum Drehen um eine Leerlaufachse, wobei das Zwischenzahnrad (1032) eine Vielzahl von Getriebezähnen einschließt, die zum Eingreifen in die Getriebezahnsequenzen (1004*a*, 1004*b*, 126A, 146, 126B, 136) ausgebildet sind; und
einen Leerlaufverschieber (1036), verbunden mit der Leerlaufachse und ausgebildet, um die Leerlaufachse so zu bewegen, dass sie den Eingriff des Zwischenzahnrads (1032) mit dem Getriebezahnsatz (1004; 124A, 124B) sowohl im ersten als auch im zweiten Zustand aufrechterhält.

2. Die Vorrichtung (1000; 110, 110') gemäß Anspruch 1, worin die Vorrichtung zur Veränderung des Durchmessers (1008; 180) weiter ausgebildet ist, um den Getriebezahnsatz (1004; 124A, 124B) so zu verschieben, dass ein Grad der peripheren Koextension (1012) zwischen mindestens den ersten und den zweiten Getriebezahnsequenzen (1004*a*, 1004*b*, 126A, 146, 126B, 136) so variiert, dass die Getriebevorrichtung (1000; 110, 110') selektiv in jeden einer Vielzahl von intermediären Zuständen versetzt wird, die jeweils ein effektives Stirnrad mit einer entsprechenden effektiven ganzen Zahl von Zähnen bereitstellen, welche einen Wert zwischen der ersten und der zweiten effektiven Zahl von Zähnen annimmt.

3. Die Vorrichtung (1000; 110, 110') gemäß Anspruch 1, worin die Vorrichtung zur Veränderung des Durchmessers (1008; 180) ausgebildet ist, um alle der Getriebezähne des Getriebezahnsatzes (1004; 124A, 124B) auf einem virtuellen Zylinder, koaxial mit der Achse (1002; S, S') zu positionieren, in jedem der ersten und der zweiten Zustände.

4. Die Vorrichtung (1000; 110, 110') gemäß Anspruch 1, worin jede der Zahnsequenzen (1004*a*, 1004*b*; 126A, 146, 124B, 136) als Streifen von Getriebezähnen ausgeführt ist, um so die einheitliche Teilung beizubehalten und gleichzeitig einen variablen Krümmungsradius zwischen dem ersten und dem zweiten Zustand unterzubringen.

5. Die Vorrichtung (1000; 110, 110') gemäß Anspruch 4, worin die Vorrichtung zur Veränderung des Durchmessers (1008; 180) ein Drehmoment sowohl zwischen der ersten als auch der zweiten Getriebezahnsequenz (1004*a*, 1004*b*) und der Achse (1002; S, S') über eine einzige mechanische Verknüpfung überträgt.

6. Die Vorrichtung (1000; 110, 110') gemäß Anspruch 4, worin die Vorrichtung zur Veränderung des Durchmessers (1008; 180) ein Drehmoment zwischen den ersten und den zweiten Getriebezahnsequenzen (1004*a*, 1004*b*, 126A, 146, 124B, 136) und der Achse (1002; S, S') über separate mechanische Verknüpfungen überträgt, die winklig um die Achse (1002; S, S') herum beabstandet sind.

7. Die Vorrichtung (1000; 110, 110') gemäß Anspruch 4, worin der Getriebezahnsatz (1004; 124A, 124B) einen einzelnen Bereich (1012) mit einem variablen Grad peripherer Koextension zwischen den Getriebezahnsequenzen (1004*a*, 1004*b*; 126A, 146, 124B, 136) hat.

8. Die Vorrichtung (1000; 110, 110') gemäß Anspruch 4, worin der Getriebezahnsatz (1004; 124A, 124B) eine Vielzahl von Bereichen (1012) mit einem variablen Grad peripherer Koextension zwischen den Getriebezahnsequenzen (1004*a*, 1004*b*; 126A, 146, 124B, 136) hat.

9. Die Vorrichtung (1000; 110, 110') gemäß Anspruch 1, worin die Vorrichtung zur Veränderung des Durchmessers (1008; 180) mindestens ein im Wesentlichen kegelförmiges Element (1014; 182) einschließt, das in mindestens eine der Getriebezahnsequenzen (1004*a*, 1004*b*; 126A, 146, 124B, 136) eingreift, so dass die Axialverschiebung des im Wesentlichen kegelförmigen Elements (1014; 182) einen Abstand der Getriebezähne der mindestens einen Getriebezahnsequenz (1004a, 1004b; 126A, 146, 124B, 136) zur Achse verändert.

10. Die Vorrichtung (1000; 110, 110') gemäß Anspruch 1, worin die Vorrichtung zur Veränderung des Durchmessers (1008; 180) mindestens ein Paar Schlitzscheiben einschließt, die mit der Achse (1002; S, S') verbunden sind, und eine Vielzahl von Stiften, die mit mindestens einer der Getriebezahnsequenzen (1004*a*, 1004*b*; 126A, 146, 124B, 136) verbunden sind und in die Schlitze eingreifen, wobei die Schlitzscheiben so ausgebildet sind, dass eine Relativdrehung der Schlitzscheiben um die Achse einen Abstand der Getriebezähne der mindestens einen Getriebezahnsequenz (1004*a*, 1004*b*; 126A, 146, 124B, 136) zur Achse verändert.

11. Die Vorrichtung (1000; 110, 110') gemäß einem beliebigen obigen Anspruch, worin die Vorrichtung zur Veränderung des Durchmessers (1008; 180) einen Sensor einschließt, der positioniert wird, um eine Ausgabe zu liefern, die einen effektiven Durchmesser der Getriebevorrichtung mit variablem Durchmesser anzeigt, wobei die Vorrichtung zur Veränderung des Durchmessers (1008; 180) auf die Ausgabe reagiert, um den Getriebezahnsatz (1004; 124A, 124B) einzustellen, um ein effektives Stirnrad mit einer effektiven ganzen Zahl von Zähnen bereitzustellen.

12. Die Vorrichtung (1000; 110, 110') gemäß einem beliebigen obigen Anspruch, worin die Vorrichtung zur Veränderung des Durchmessers (1008; 180) Folgendes einschließt:
(a) einen Sensor, positioniert, um eine Ausgabe zu liefern, die eine aktuelle Winkelposition der Achse (1002; S, S') anzeigt; und
(b) eine Steuerung, die auf die Ausgabe reagiert, um die Umwandlung selektiv durchzuführen, während die Achse (1002; S, S') sich innerhalb einer zulässigen Bandbreite von Winkelpositionen befindet.

13. Die Vorrichtung (1000; 110, 110') gemäß einem beliebigen obigen Anspruch, worin der Getriebezahnsatz (1004; 124A, 124B) kontinuierlichen Zahneingriff um die gesamte Peripherie des effektiven Zahnrads in allen Zuständen des Getriebezahnsatzes (1004; 124A, 124B) ermöglicht.

## Revendications

1. Dispositif d'engrenage à diamètre variable (1000 ; 110, 110'), pour utilisation dans un système de transmission à rapport variable, le dispositif d'engrenage (1000 ; 110, 110') à diamètre variable comprenant :
(a) un axe (1002 ; S, S') définissant un axe de rotation ;
(b) un jeu de dents de roue d'engrenage (1004 ; 124A, 124B), déployé autour dudit axe (1002 ; S, S'), ledit jeu de dents de roue d'engrenage (1004 ; 124A, 124B) comprenant au moins :
(i) une première succession de dents de roue d'engrenage déplaçable (1004a ; 124A), comprenant une pluralité de dents de roue d'engrenage (1006 ; 126A, 146) espacées selon un pas uniforme, et
(ii) une deuxième succession de dents de roue d'engrenage déplaçable (1004b ; 124B), comprenant une pluralité de dents de roue d'engrenage (1006 ; 126B, 136) espacées selon ledit pas uniforme
(c) un changeur de diamètre (1008 ; 180), relié mécaniquement audit axe (1002 ; S, S') et audit jeu de dents de roue d'engrenage (1004 ; 124A, 124B), de manière à transférer un mouvement rotatif entre ledit axe (1002 ; S, S') et ledit jeu de dents de roue d'engrenage (1004 ; 124A, 124B), dans lequel :
ledit changeur de diamètre (1008 ; 180) est configuré pour déplacer ledit jeu de dents de roue d'engrenage (1004 ; 124A, 124B), de manière à modifier un degré de coextension périphérique (1012) entre au moins lesdites première et deuxième successions de dents de roue d'engrenage déplaçables (1004a, 1004b ; 126A, 146, 126B, 136), de manière à transformer le dispositif d'engrenage (1000 ; 110, 100') entre :
(i) un premier état, dans lequel ledit jeu de dents de roue d'engrenage (1004 ; 124A, 124B) est déployé pour fournir une roue d'engrenage cylindrique efficace, avec un premier nombre de dents efficace, et
(ii) un deuxième état, dans lequel ledit jeu de dents de roue d'engrenage (1004 ; 124A, 124B) est déployé pour fournir une roue d'engrenage cylindrique efficace, avec un deuxième nombre de dents efficace, supérieur audit premier nombre de dents efficace ;
**caractérisé en ce que** ledit dispositif d'engrenage à diamètre variable comprend en outre :
une roue d'engrenage folle (1032), déployée pour tourner autour d'un axe à roue folle,
ladite roue d'engrenage folle (1032) comprenant une pluralité de dents de roue d'engrenage, configurées pour s'engrener avec lesdites successions de dents de roue d'engrenage déplaçables (1004a, 1004b ; 126A, 146, 126B, 136) ; et
un déplaceur de roue folle (1036), associé audit axe à roue folle et configuré pour déplacer ledit axe à roue folle de manière à maintenir une engrènement de ladite roue d'engrenage folle (1032) avec ledit jeu de dents de roue d'engrenage (1004 ; 124A, 124B), à la fois audit premier et audit deuxième état.

2. Dispositif (1000 ; 110, 110') selon la revendication 1, dans lequel ledit changeur de diamètre (1008 ; 180) est en outre configuré pour déplacer ledit jeu de dents de roue d'engrenage (1004 ; 124A, 124B), de manière à modifier un degré de coextension périphérique (1012) entre au moins lesdites première et deuxième successions de dents de roue d'engrenage (1004a, 1004b ; 126A, 146, 126B, 136), de manière à transformer sélectivement le dispositif d'engrenage (1000 ; 110, 110') en chacun d'une pluralité d'états intermédiaires, fournissant chacun une roue dentée cylindrique efficace ayant un nombre efficace de dents entier correspondant, prenant une valeur dans la fourchette entre ledit premier et ledit deuxième nombre efficace de dents.

3. Dispositif (1000 ; 110, 110') selon la revendication 1, dans lequel ledit changeur de diamètre (1008 ; 180) est configuré pour positionner la totalité desdites dents d'engrenage dudit jeu de dents de roue d'engrenage (1004 ; 124A, 124B) sur un cylindre virtuel, coaxial audit axe (1002 ; S, S'), dans chacun dudit premier et dudit deuxième état.

4. Dispositif (1000 ; 110, 110') selon la revendication 1, dans lequel chacune desdites successions de dents (1004a, 1004b ; 126A, 146, 124B, 136) est mise en oeuvre sous forme de bande de dents d'engrenage, interconnectées de manière à maintenir ledit pas uniforme, tout en permettant d'avoir un rayon de courbure variable entre ledit premier et ledit deuxième état.

5. Dispositif (1000 ; 110, 110') selon la revendication 4, dans lequel ledit changeur de diamètre (1008 ; 180) transfère un mouvement de rotation, entre à la fois ladite première et ladite deuxième succession de dents d'engrenage (1004a, 1004b) et ledit axe (1002 ; S, S'), via une liaison mécanique unique.

6. Dispositif (1000 ; 110, 110') selon la revendication 4, dans lequel ledit changeur de diamètre (1008 ; 180) transfère un mouvement de rotation, entre ladite première et ladite deuxième succession de dents d'engrenage (1004a, 1004b ; 126A, 146, 124B, 136) et ledit axe (1002 ; S, S'), via des liaisons mécaniques séparées, angulairement espacées autour dudit axe (1002 ; S, S').

7. Dispositif (1000 ; 110, 110') selon la revendication 4, dans lequel ledit jeu de dents de roue d'engrenage (1004 ; 124A, 124B) présente une région (1012) unique ayant un degré de coextension périphérique variable entre lesdites successions de dents d'engrenage (1004a, 1004b ; 126A, 146, 124B, 136).

8. Dispositif (1000 ; 110, 110') selon la revendication 4, dans lequel ledit jeu de dents de roue d'engrenage (1004 ; 124A, 124B) présente une pluralité de régions (1012) ayant un degré de coextension périphérique variable entre lesdites successions de dents d'engrenage (1004a, 1004b ; 126A, 146, 124B, 136).

9. Dispositif (1000 ; 110, 110') selon la revendication 1, dans lequel ledit changeur de diamètre (1008 ; 180) comprend au moins un élément sensiblement conique (1014 ; 182), engrené avec au moins l'une desdites successions de dents d'engrenage (1004a, 1004b ; 126A, 146, 124B, 136), de manière qu'un déplacement axial dudit élément sensiblement conique (1014 ; 182) produise un changement de la distance desdites dents d'engrenage de ladite au moins une succession de dents d'engrenage (1004a, 1004b ; 126A, 146, 124B, 136) vis-à-vis dudit axe.

10. Dispositif (1000 ; 110, 110') selon la revendication 1, dans lequel ledit changeur de diamètre (1008 ; 180) comprend au moins une paire de disques fendus, associés audit axe (1002 ; S, S'), et une pluralité de tiges, associées à au moins l'une desdites successions de dents d'engrenage (1004a, 1004b ; 126A, 146, 124B, 136) et engrenées dans lesdites fentes, lesdits disques fendus étant configurés de manière qu'une rotation relative desdits disques fendus autour dudit axe provoque un changement de la distance desdites dents d'engrenage de ladite au moins une succession de dents d'engrenage (1004a, 1004b ; 126A, 146, 124B, 136) vis-à-vis dudit axe.

11. Dispositif (1000 ; 110, 110') selon l'une quelconque des revendications précédentes, dans lequel ledit changeur de diamètre (1008 ; 180) comprend un capteur, déployé pour générer un signal de sortie, indicatif d'un diamètre efficace du dispositif d'engrenage à diamètre variable, ledit changeur de diamètre (1008 ; 180) réagissant audit signal de sortie, pour ajuster ledit jeu de dents de roue d'engrenage (1004 ; 124A, 124B) de manière à fournir une roue dentée cylindrique efficace, ayant un nombre de dents efficace entier.

12. Dispositif (1000 ; 110, 110') selon l'une quelconque des revendications précédentes, dans lequel ledit changeur de diamètre (1008 ; 180) comprend :
(a) un capteur, déployé pour générer un signal de sortie indicatif d'une position angulaire actuelle dudit axe (1002 ; S, S') ; et
(b) un contrôleur, réagissant audit signal de sortie, pour effectuer sélectivement ladite transformation, tandis que ledit axe (1002 ; S, S') est situé dans une fourchette autorisée de positions angulaires.

13. Dispositif (1000 ; 110, 110') selon l'une quelconque des revendications précédentes, dans lequel le jeu de dents de roue d'engrenage (1004 ; 124A, 124B) permet un engrènement denté continu autour de la périphérie entière de la roue d'engrenage cylindrique efficace, dans tous les états du jeu de dents de roue d'engrenage (1004 ; 124A, 124B).
